# EUROPEAN PATENT APPLICATION

(11) **EP 2 930 987 A1**
(43) Date of publication of application: **14.10.2015**
(21) Application number: 12890726.8
(22) Date of filing: 31.12.2012
(51) Int. Cl.: H04W 72/04

(54) **INFORMATION TRANSMISSION METHOD AND DEVICE**

(71) Applicant: Huawei Technologies Co., Ltd., Longgang District Shenzhen, Guangdong 518129 (CN)
(72) Inventor: GUAN, Lei, Shenzhen Guangdong 518129 (CN); XUE, Lixia, Shenzhen Guangdong 518129 (CN); MA, Sha, Shenzhen Guangdong 518129 (CN)
(74) Representative: Pfenning, Meinig & Partner GbR
(86) International application number: PCT/CN2012/088136
(87) International publication number: WO 2014/101233

(57) **Abstract**

The present invention provides an information transmission method and apparatus. The information transmission method includes: obtaining, by a terminal, subframe configuration information of at least two serving cells, and transmitting, by the terminal according to HARQ timing relationships respectively corresponding to the at least two serving cells, information with a network side device in uplink subframes and/or downlink subframes indicated by the subframe configuration information; where the at least two serving cells include at least one first serving cell, where an HARQ timing relationship of the first serving cell is an HARQ timing relationship of TDD configuration n, and an uplink and downlink configuration of TDD configuration n is different from an uplink and downlink configuration of the first serving cell; or, a timing relationship of a first downlink subframe set of the first serving cell is an HARQ timing relationship of FDD and a timing relationship of a second downlink subframe set is an HARQ timing relationship of TDD.

## Description

### TECHNICAL FIELD

The present invention relates to communications technologies, and in particular, to an information transmission method and apparatus.

### BACKGROUND

Generally, in a heterogeneous network, a macro cell can provide a user equipment (User Equipment, UE for short) with functions of mobility management and radio link control, and a micro cell can provide a terminal with high-speed data transmission without providing an access capability. The macro cell may be referred to as a primary serving cell and the micro cell may be referred to as an auxiliary serving cell. A UE is accessed and receives radio resource control (Radio Resource Control, RRC for short) information from a macro cell. A certain micro cell is configured for the UE, and the UE performs carrier aggregation in the macro cell and the micro cell. According to a current carrier aggregation mechanism, a physical uplink control channel (Physical Uplink Control Channel, PUCCH for short) used to bear acknowledge (ACKnowledge, ACK for short)/unacknowledge (UnACKnowledge, NACK for short) information or periodical channel state information corresponding to downlink data can only be transmitted in the primary serving cell, which leads to a heavier load of the macro cell. In addition, a UE without a carrier aggregation (Carrier Aggregation, CA for short) capability can only transmit data in a macro cell, which also leads to a heavier load of the macro cell.

In order to lighten uplink load of the primary serving cell, the UE may use different serving cells at different subframe moments. The UE holds an RRC connection with the primary serving cell at moments of a part of subframes and transmits data on the micro cell at other subframe moments, so as to relieve the load of the primary serving cell. For a UE without a CA capability, it can switch subframes between the auxiliary serving cell and the primary serving cell. For example, for a frequency division duplex (Frequency Division Duplex, FDD for short) system, to enable switching of uplink subframes between the primary serving cell and the auxiliary serving cell, a part of subframes on the auxiliary serving cell are muted, where subframes of the primary serving cell corresponding to the same time moment as this part of subframes are uplink subframes, and a part of subframes of the primary serving cell are also muted, where subframes on the auxiliary serving cell corresponding to the same time moment as this part of subframes are uplink subframes of the auxiliary serving cell. To lighten the downlink load of the primary serving cell, similar processing may be applied.

However, as a part of subframes of the primary serving cell and auxiliary serving cell will be muted, an uplink subframe, which is need for a UE to feed back a corresponding ACK/NACK of a physical downlink shared channel (Physical Downlink Shared Channel, PDSCH for short) according to a hybrid automatic repeat request (Hybrid Automatic Repeat Request, HARQ for short) timing relationship, is possibly muted, so that the UE cannot feed back the ACK/NACK to a base station; and also, a downlink subframe, which is used for the base station to perform retransmission scheduling of a physical uplink shared channel (Physical Uplink Shared Channel, PUSCH for short) according to the HARQ timing relationship, is possibly muted, so that the base station cannot reschedule the UE, that is, a corresponding downlink ACK/NACK of the PUSCH in an uplink subframe cannot be transmitted.

### SUMMARY

The present invention provides an information transmission method and apparatus, to solve the technical problem that, because a part of subframes of a serving cell are muted, a UE possibly cannot feed back an ACK/NACK corresponding to a PDSCH in the serving cell and a base station cannot reschedule a PUSCH of the UE in the serving cell.

According to a first aspect, the present invention provides an information transmission method, including:
obtaining, by a terminal, subframe configuration information of at least two serving cells, and obtaining an HARQ timing relationship corresponding to each serving cell of the at least two serving cells, where the subframe configuration information of each serving cell of the at least two serving cells is used to indicate uplink subframes used by the terminal and muted uplink subframes in each serving cell, and/or used to indicate downlink subframes used by the terminal and muted downlink subframes in each serving cell; and
transmitting, by the terminal according to the HARQ timing relationship corresponding to each serving cell of the at least two serving cells, information with a network side device in the uplink subframes and/or downlink subframes indicated by the subframe configuration information of each serving cell;
where the at least two serving cells include at least one first serving cell, where an HARQ timing relationship corresponding to the first serving cell is an HARQ timing relationship corresponding to TDD configuration n, and an uplink and downlink configuration of TDD configuration n is different from an uplink and downlink configuration of the first serving cell; according to the HARQ timing relationship corresponding to TDD configuration n, an uplink ACK/NACK corresponding to at least one downlink subframe of the first serving cell can be transmitted in a corresponding uplink subframe, and/or, according to the HARQ timing relationship corresponding to TDD configuration n, a downlink ACK/NACK corresponding to a PUSCH of at least one uplink subframe of the first serving cell can be transmitted in a corresponding downlink subframe; and a TDD system has N uplink and downlink configurations, where n is a natural number that is less than or equal to N-1 and greater than or equal to 0, and N is a natural number that is greater than or equal to 1;
or, a timing relationship of a first downlink subframe set of the first serving cell is an HARQ timing relationship of FDD, and a timing relationship of a second downlink subframe set of the first serving cell is an HARQ timing relationship of TDD.

According to a second aspect, the present invention provides another information transmission method, including:
determining, by a network side device, subframe configuration information of at least two serving cells which is to be delivered to a terminal, and determining an HARQ timing relationship corresponding to each serving cell of the at least two serving cells, where the subframe configuration information of each serving cell is used to indicate uplink subframes used by the terminal and muted uplink subframes in each serving cell, and/or used to indicate downlink subframes used by the terminal and muted downlink subframes in each serving cell;
delivering, by the network side device, the subframe configuration information of the at least two serving cells to the terminal, and delivering the HARQ timing relationship corresponding to each serving cell of the at least two serving cells to the terminal; and
transmitting, by the network side device according to the HARQ timing relationship corresponding to each serving cell, information with the terminal in the uplink subframes and/or downlink subframes indicated by the subframe configuration information of each serving cell;
where the at least two serving cells include at least one first serving cell, where an HARQ timing relationship corresponding to the first serving cell is an HARQ timing relationship corresponding to TDD configuration n, and an uplink and downlink configuration of TDD configuration n is different from an uplink and downlink configuration of the first serving cell; according to the HARQ timing relationship corresponding to TDD configuration n, an uplink ACK/NACK corresponding to at least one downlink subframe of the first serving cell can be transmitted in a corresponding uplink subframe, and/or, according to the HARQ timing relationship corresponding to TDD configuration n, a downlink ACK/NACK corresponding to a PUSCH of at least one uplink subframe of the first serving cell can be transmitted in a corresponding downlink subframe; and a TDD system has N uplink and downlink configurations, where n is a natural number that is less than or equal to 0 and greater than or equal to N-1, and N is a natural number that is greater than or equal to 1;
or,
a timing relationship of a first downlink subframe set of the first serving cell is an HARQ timing relationship of FDD, and a timing relationship of a second downlink subframe set of the first serving cell is an HARQ timing relationship of TDD.

According to a third aspect, the present invention provides an information transmission apparatus, including:
an obtaining module, configured to obtain subframe configuration information of at least two serving cells and obtain an HARQ timing relationship corresponding to each serving cell of the at least two serving cells, where the subframe configuration information of each serving cell of the at least two serving cells is used to indicate uplink subframes used by the terminal and muted uplink subframes in each serving cell, and/or used to indicate downlink subframes used by the terminal and muted downlink subframes in each serving cell; and
a transmission module, configured to transmit, according to the HARQ timing relationship corresponding to each serving cell of the at least two serving cells, information with a network side device in the uplink subframes and/or downlink subframes indicated by the subframe configuration information of each serving cell;
where the at least two serving cells include at least one first serving cell, where an HARQ timing relationship corresponding to the first serving cell is an HARQ timing relationship corresponding to TDD configuration n, and an uplink and downlink configuration of TDD configuration n is different from an uplink and downlink configuration of the first serving cell; according to the HARQ timing relationship corresponding to TDD configuration n, an uplink ACK/NACK corresponding to at least one downlink subframe of the first serving cell can be transmitted in a corresponding uplink subframe, and/or, according to the HARQ timing relationship corresponding to TDD configuration n, a downlink ACK/NACK corresponding to a PUSCH of at least one uplink subframe of the first serving cell can be transmitted in a corresponding downlink subframe; and a TDD system has N uplink and downlink configurations, where n is a natural number that is less than or equal to 0 and greater than or equal to N-1, and N is a natural number that is greater than or equal to 1;
or,
a timing relationship of a first downlink subframe set of the first serving cell is an HARQ timing relationship of FDD, and a timing relationship of a second downlink subframe set of the first serving cell is an HARQ timing relationship of TDD.

According to a fourth aspect, the present invention provides an information transmission apparatus, including:
a determining module, configured to determine subframe configuration information of at least two serving cells which is to be delivered to a terminal, and determine an HARQ timing relationship corresponding to each serving cell of the at least two serving cells, where the subframe configuration information of each serving cell is used to indicate uplink subframes used by the terminal and muted uplink subframes in each serving cell, and/or used to indicate downlink subframes used by the terminal and muted downlink subframes in each serving cell; and
a transmission module, configured to deliver the subframe configuration information of the at least two serving cells to the terminal and deliver the HARQ timing relationship corresponding to each serving cell of the at least two serving cells to the terminal; where
the transmission module is further configured to transmit, according to the HARQ timing relationship corresponding to each serving cell, information with the terminal in the uplink subframes and/or downlink subframes indicated by the subframe configuration information of each serving cell;
where the at least two serving cells include at least one first serving cell, where an HARQ timing relationship corresponding to the first serving cell is an HARQ timing relationship corresponding to TDD configuration n, and an uplink and downlink configuration of TDD configuration n is different from an uplink and downlink configuration of the first serving cell; according to the HARQ timing relationship corresponding to TDD configuration n, an uplink ACK/NACK corresponding to at least one downlink subframe of the first serving cell can be transmitted in a corresponding uplink subframe, or, according to the HARQ timing relationship corresponding to TDD configuration n, a downlink ACK/NACK corresponding to a PUSCH of at least one uplink subframe of the first serving cell can be transmitted in a corresponding downlink subframe; and a TDD system has N uplink and downlink configurations, where n is a natural number that is less than or equal to 0 and greater than or equal to N-1, and N is a natural number that is greater than or equal to 1;
or,
a timing relationship of a first downlink subframe set of the first serving cell is an HARQ timing relationship of FDD, and a timing relationship of a second downlink subframe set of the first serving cell is an HARQ timing relationship of TDD.

According to a fifth aspect, the present invention provides a terminal, including: a processor, a memory, a transceiver, and a bus, where the processor, the memory, and the transceiver are connected through the bus; and
the memory is configured to store a group of program code, and the processor is configured to invoke the program code stored in the memory to execute the following operations:
obtaining subframe configuration information of at least two serving cells, and obtaining an HARQ timing relationship corresponding to each serving cell of the at least two serving cells, where the subframe configuration information of each serving cell of the at least two serving cells is used to indicate uplink subframes used by the terminal and muted uplink subframes in each serving cell, and/or used to indicate downlink subframes used by the terminal and muted downlink subframes in each serving cell; and
transmitting, according to the HARQ timing relationship corresponding to each serving cell of the at least two serving cells, information with a network side device in the uplink subframes and/or downlink subframes indicated by the subframe configuration information of each serving cell;
where the at least two serving cells include at least one first serving cell, where an HARQ timing relationship corresponding to the first serving cell is an HARQ timing relationship corresponding to TDD configuration n, and an uplink and downlink configuration of TDD configuration n is different from an uplink and downlink configuration of the first serving cell; according to the HARQ timing relationship corresponding to TDD configuration n, an uplink ACK/NACK corresponding to at least one downlink subframe of the first serving cell can be transmitted in a corresponding uplink subframe, and/or, according to the HARQ timing relationship corresponding to TDD configuration n, a downlink ACK/NACK corresponding to a PUSCH of at least one uplink subframe of the first serving cell can be transmitted in a corresponding downlink subframe; and a TDD system has N uplink and downlink configurations, where n is a natural number that is less than or equal to 0 and greater than or equal to N-1, and N is a natural number that is greater than or equal to 1;
or,
a timing relationship of a first downlink subframe set of the first serving cell is an HARQ timing relationship of FDD, and a timing relationship of a second downlink subframe set of the first serving cell is an HARQ timing relationship of TDD.

According to a sixth aspect, the present invention provides a network side device, including: a processor, a memory, a transceiver, and a bus, where the processor, the memory, and the transceiver are connected through the bus; and
the memory is configured to store a group of program code, and the processor is configured to invoke the program code stored in the memory to execute the following operations:
determining subframe configuration information of at least two serving cells which is to be delivered to a terminal and determining an HARQ timing relationship corresponding to each serving cell of the at least two serving cells, where the subframe configuration information of each serving cell is used to indicate uplink subframes used by the terminal and muted uplink subframes in each serving cell, and/or used to indicate downlink subframes used by the terminal and muted downlink subframes in each serving cell;
delivering the subframe configuration information of the at least two serving cells to the terminal, and delivering the HARQ timing relationship corresponding to each serving cell of the at least two serving cells to the terminal; and
the transmission module is further configured to transmit, according to the HARQ timing relationship corresponding to each serving cell, information with the terminal in the uplink subframes and/or downlink subframes indicated by the subframe configuration information of each serving cell;
where the at least two serving cells include at least one first serving cell, where an HARQ timing relationship corresponding to the first serving cell is an HARQ timing relationship corresponding to TDD configuration n, and an uplink and downlink configuration of TDD configuration n is different from an uplink and downlink configuration of the first serving cell; according to the HARQ timing relationship corresponding to TDD configuration n, an uplink ACK/NACK corresponding to at least one downlink subframe of the first serving cell can be transmitted in a corresponding uplink subframe, or, according to the HARQ timing relationship corresponding to TDD configuration n, a downlink ACK/NACK corresponding to a PUSCH of at least one uplink subframe of the first serving cell can be transmitted in a corresponding downlink subframe; and a TDD system has N uplink and downlink configurations, where n is a natural number that is less than or equal to 0 and greater than or equal to N-1, and N is a natural number that is greater than or equal to 1;
or,
a timing relationship of a first downlink subframe set of the first serving cell is an HARQ timing relationship of FDD, and a timing relationship of a second downlink subframe set of the first serving cell is an HARQ timing relationship of TDD.

In the foregoing technical solution, the HARQ timing relationship corresponding to at least one serving cell in a heterogeneous network is the HARQ timing relationship corresponding to TDD configuration n, and the uplink and downlink configuration of TDD configuration n is different from the uplink and downlink configuration of the first serving cell. According to the HARQ timing relationship corresponding to TDD configuration n, an uplink ACK/NACK corresponding to at least one downlink subframe of the above serving cells can be transmitted in a corresponding uplink subframe, thereby solving the technical problem that a UE cannot feed back an ACK/NACK corresponding to a PDSCH in a serving cell where an uplink subframe is muted. Alternatively, according to the HARQ timing relationship corresponding to TDD configuration n, a downlink ACK/NACK corresponding to a PUSCH of at least one uplink subframe of the above serving cells can be transmitted in a corresponding downlink subframe, thereby solving the technical problem that a PUSCH of a UE cannot be scheduled to be retransmitted because a downlink subframe in the serving cell is muted. Alternatively, in a first downlink subframe set of at least one serving cell in the heterogeneous network, data transmission is performed according to an HARQ timing relationship of FDD, and in a second downlink subframe set of the above serving cell, data transmission is performed according to an HARQ timing relationship of TDD, so that all downlink subframes of the second serving cell can be used to transmit PDSCHs, where each PDSCH has a corresponding uplink ACK/NACK which can be fed back in a corresponding uplink subframe. Therefore, the technical problem that, because a part of subframes on an uplink carrier of the serving cell are muted, an uplink ACK/NACK corresponding to a PDSCH of a corresponding downlink subframe on a downlink carrier cannot be fed back is solved.

### BRIEF DESCRIPTION OF DRAWINGS

FIG. 1 is a schematic diagram of uplink and downlink configurations of a UE in two serving cells according to an embodiment of the present invention, where the UE has no CA capability in uplink and downlink in an FDD system;
FIG. 2 is a flowchart of an information transmission method provided by an embodiment of the present invention;
FIG. 3A is a diagram illustrating an application scenario of FIG. 2;
FIG. 3B is a diagram illustrating another application scenario of FIG. 2;
FIG. 4 is a flowchart of another information transmission method provided by an embodiment of the present invention;
FIG. 5 is a schematic structural diagram of an information transmission apparatus provided by the present invention;
FIG. 6 is a schematic structural diagram of another information transmission apparatus provided by the present invention;
FIG. 7 is a schematic structural diagram of a terminal provided by the present invention; and
FIG. 8 is a schematic structural diagram of a network side device provided by the present invention.

### DESCRIPTION OF EMBODIMENTS

In an LTE FDD system, for downlink data scheduling, if a UE receives a PDSCH in subframe n, the UE will feed back an uplink ACK/NACK corresponding to the PDSCH in subframe n+4, and particularly, scheduling for retransmission of the downlink PDSCH is asynchronous, which means that it is unnecessary for a downlink assignment (Downlink_assignment, DL_assignment for short) of retransmission to have an interval of four subframes with the feedback of the ACK/NACK. For uplink data scheduling, if a UE receives an uplink grant (Uplink_grant, UL_grant for short) in subframe n, the UE will transmit, in subframe n+4, a PUSCH scheduled by the UL_grant, and a base station will feed back to the UE a physical HARQ indicator channel (Physical HARQ Indicator Channel, PHICH for short), namely a downlink ACK/NACK, in subframe n+8. Particularly, scheduling for retransmission of the uplink PUSCH is synchronous, which means that the retransmitted UL_grant must have an interval of four subframes with the last PUSCH of the same process.

An LTE TDD system has seven different uplink and downlink configurations, where each uplink and downlink configuration corresponds to HARQ timing for scheduling of a set of uplink and downlink data and does not have to strictly follow the above principle of {n, n+4}. A specific description is given in Table 1 and Table 2, where subframes with underlined numbers are uplink subframes and the rest may be downlink subframes. In Table 1, the underlined numbers indicate uplink ACKs/NACKs corresponding to PDSCHs of which downlink subframes need to be fed back in the current uplink subframe. For example, 5, 6 in subframe 2 of configuration 1 indicate that uplink subframe 2 is used to feed back uplink ACKs/NACKs for downlink subframes 5 and 6. In Table 2, the underlined numbers indicate on which downlink subframe or downlink subframes an UL_grant that schedules a PUSCH of the current uplink subframe is transmitted. For example, the PUSCH of uplink subframe 2 of configuration 1 is scheduled by the UL_grant transmitted on downlink subframe 6, and the PUSCH of uplink subframe 2 of configuration 0 is scheduled by the UL_grant transmitted on downlink subframes 5 and 6.

**Table 1: Timing relationship between a PDSCH and an uplink ACK/NACK in an LTE TDD system**

| TDD uplink and downlink configuration | Subframe Index | | | | | | | | | |
|---|---|---|---|---|---|---|---|---|---|---|
| | 0 | 1 | 2 | 3 | 4 | 5 | 6 | 7 | 8 | 9 |
| 0 | - | - | 6 | X | 0 | - | - | 1 | X | 5 |
| 1 | - | - | 5, 6 | 9 | - | - | - | 0, 1 | 4 | - |
| 2 | - | - | 4, 5, 6, 8 | - | - | - | - | 0, 1, 3, 9 | - | - |
| 3 | - | - | 1, 5, 6 | 7, 8 | 0, 9 | - | - | - | - | - |
| 4 | - | - | 0, 1, 4, 5 | 6, 7, 8, 9 | - | - | - | - | - | - |
| 5 | - | - | 0, 1, 3, 4, 5, 6, 7, 8, 9 | - | - | - | - | - | - | - |
| 6 | - | - | 5 | 6 | 9 | - | - | 0 | 1 | - |

**Table 2: Timing relationship between an UL_grant and/or a PHICH and a PUSCH in an LTE TDD system**

| TDD uplink and downlink configuration | Subframe Index | | | | | | | | | |
|---|---|---|---|---|---|---|---|---|---|---|
| | 0 | 1 | 2 | 3 | 4 | 5 | 6 | 7 | 8 | 9 |
| 0 | | | 5, 6 | 6 | 0 | | | 0, 1 | 1 | 5 |
| 1 | | | 6 | 9 | | | | 1 | 4 | |
| 2 | | | 8 | | | | | 3 | | |
| 3 | | | 8 | 9 | 0 | | | | | |
| 4 | | | 8 | 9 | | | | | | |
| 5 | | | 8 | | | | | | | |
| 6 | | | 5 | 6 | 9 | | | 0 | 1 | |

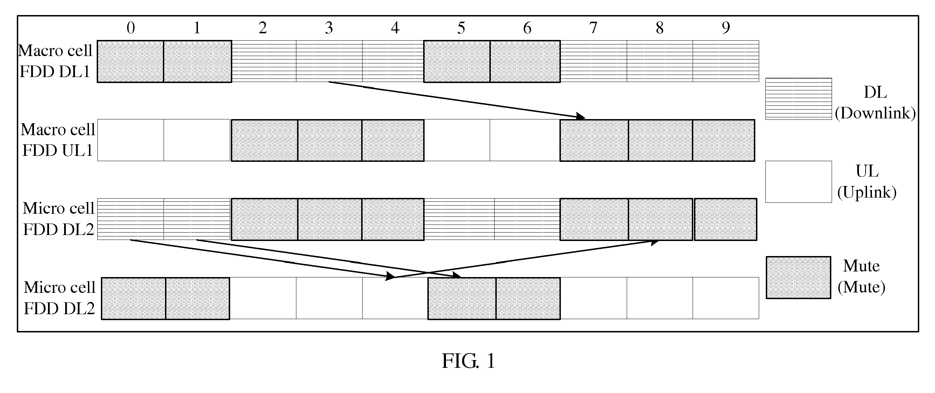

As shown in FIG. 1, an ACK/NACK corresponding to a PDSCH of downlink subframe 3 of a macro cell should be fed back in uplink subframe 3+4, but uplink subframe 7 of the macro cell is muted because it is reserved for a micro cell for uplink transmission. For another example, in the micro cell, if a PUSCH in the fourth uplink subframe and scheduled by an UL_grant in downlink subframe 0 is not transmitted correctly, the micro cell will transmit, in the eighth downlink subframe, a PHICH or the PUSCH scheduled by the UL_grant to be retransmitted, but the eighth downlink subframe of the micro cell will be muted because it is reserved for the macro cell for downlink transmission.

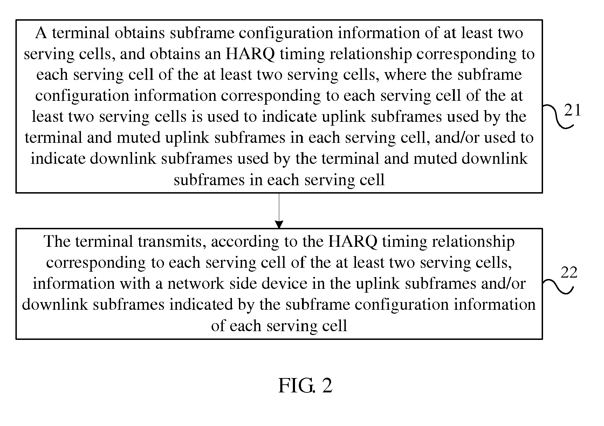

FIG. 2 is a flowchart of an information transmission method provided by an embodiment of the present invention. As shown in FIG. 2, the method provided by this embodiment includes the following steps:

Step 21: A terminal obtains subframe configuration information of at least two serving cells, and obtains an HARQ timing relationship corresponding to each serving cell of the at least two serving cells, where the subframe configuration information corresponding to each serving cell of the at least two serving cells is used to indicate uplink subframes used by the terminal and muted uplink subframes in each serving cell, and/or used to indicate downlink subframes used by the terminal and muted downlink subframes in each serving cell.

Different serving cells may work in different frequencies. For example, a serving cell has a pair of 20MHz carriers or one 20MHz carrier in the 800MHz frequency, and another serving cell has a pair of carriers or one carrier in the 3.5GHz frequency. In an FDD system, a serving cell includes a pair of uplink and downlink carriers; and in a TDD system, a serving cell only has one carrier, and uplink and downlink subframes are grouped by different subframes on the carrier, and different serving cells may work in a same frequency, or may be serving cells with a same frequency band in a same frequency. For example, two serving cells both work in the 800MHz frequency, and on the same pair of 20MHz carriers or the same one 20MHz carrier. There is no limitation to backhaul conditions among different serving cells. That is, the backhaul condition may be an ideal or non-ideal backhaul condition.

Optionally, among corresponding uplink and downlink carriers in the at least two serving cells, one uplink carrier corresponds to one or more downlink carriers.

In a current LTE system, uplink carriers and downlink carriers in a serving cell are in one-to-one correspondence, or called system associated. The situation of the two serving cells may include: downlink carrier 1 and uplink carrier 1 serve as one serving cell, and downlink carrier 2 and uplink carrier 2 serve as another serving cell; and it may also include: downlink carrier 1 and uplink carrier 1 serve as one serving cell, and downlink carrier 2 serves as another serving cell. Further, an uplink carrier may correspond to a plurality of downlink carriers, and then the situation of the two serving cells may also include: downlink carrier 1 and uplink carrier 1 serve as one serving cell, and downlink carrier 2 and uplink carrier 1 serve as another serving cell, which means that the same uplink carrier 1 may correspond to two different downlink carriers. When there are no ideal backhaul conditions among a plurality of serving cells, transmission of uplink information is more flexible. For example, uplink subframes on a same uplink carrier may be grouped, and different groups of subframes correspond to different downlink carriers so that uplink and downlink scheduling can be unloaded from the macro cell to the micro cell.

Optionally, the at least two serving cells include two TDD serving cells; and/or, the at least two serving cells include one FDD serving cell and one TDD serving cell.

A UE may obtain the subframe configuration information of the at least two serving cells through RRC signaling transmitted by a network side device, such as a base station or a radio network controller. Each serving cell has its corresponding subframe configuration information. The subframe configuration information corresponding to each serving cell is used to indicate uplink subframes used by the terminal and muted uplink subframes in each serving cell, and/or used to indicate downlink subframes used by the terminal and muted downlink subframes in each serving cell.

Optionally, subframe configuration information of different serving cells of the at least two serving cells indicates that uplink subframes used by the terminal do not overlap at all or partly overlap; and/or, indicates that downlink subframes used by the terminal do not overlap at all or partly overlap.

Step 22: The terminal transmits, according to the HARQ timing relationship corresponding to each serving cell of the at least two serving cells, information with the network side device in the uplink subframes and/or downlink subframes indicated by the subframe configuration information of each serving cell.

Optionally, the HARQ timing relationship includes: a timing relationship from a PDSCH to an uplink ACK/NACK, and/or, a timing relationship from a PUSCH to a downlink ACK/NACK.

With respect to the HARQ timing relationship corresponding to each serving cell of the at least two serving cells, a solution provided by this embodiment is: the at least two serving cells include at least one first serving cell, where the HARQ timing relationship corresponding to the first serving cell is the HARQ timing relationship corresponding to TDD configuration n, and an uplink and downlink configuration of TDD configuration n is different from an uplink and downlink configuration of the first serving cell. According to the HARQ timing relationship corresponding to TDD configuration n, an uplink ACK/NACK corresponding to at least one downlink subframe of the first serving cell can be transmitted in a corresponding uplink subframe, or, according to the HARQ timing relationship corresponding to TDD configuration n, a downlink ACK/NACK corresponding to a PUSCH of at least one uplink subframe of the first serving cell can be transmitted in a corresponding downlink subframe. A TDD system has N uplink and downlink configurations, where n is a natural number that is less than or equal to 0 and greater than or equal to N-1. For example, the LTE TDD system has seven different uplink and downlink configurations: TDD configuration 0 to TDD configuration 6.

Optionally, when an HARQ timing relationship corresponding to TDD configuration n is applied, in the first serving cell, uplink ACKs/NACKs corresponding to PDSCHs of P downlink subframes can be fed back in uplink subframes, and when an original HARQ timing relationship of the first serving cell is applied, in the first serving cell, uplink ACKs/NACKs corresponding to PDSCHs of Q downlink subframes can be fed back in uplink subframes, where P is greater than Q and both P and Q are natural numbers; and/or,
when an HARQ timing relationship corresponding to TDD configuration n is applied, in the first serving cell, downlink ACKs/NACKs corresponding to PUSCHs of M uplink subframes can be transmitted in downlink subframes, and when an original HARQ timing relationship of the first serving cell is applied, in the first serving cell, downlink ACKs/NACKs corresponding to PUSCHs of N uplink subframes can be transmitted in downlink subframes, where M is greater than N and both M and N are natural numbers.

The original HARQ timing relationship of the above first serving cell is an HARQ timing relationship that is applied when no uplink or downlink subframe of the first serving cell is muted.

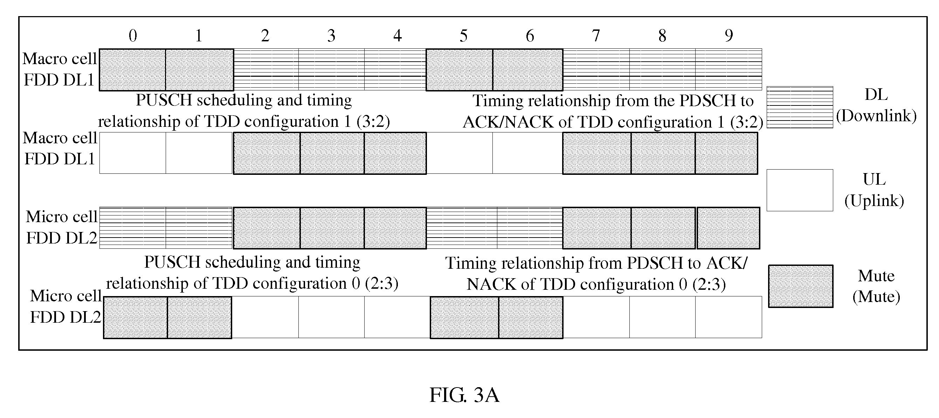

For example, both the macro cell and the micro cell are FDD systems. As shown in FIG. 3A, on an uplink carrier of the macro cell, uplink subframes 0, 1, 5 and 6 are used by the macro cell, and uplink subframes 2, 3, 4, 7, 8, and 9 of the macro cell are muted. On an uplink carrier of the micro cell, uplink subframes 2, 3, 4, 7, 8, and 9 are used by the micro cell, and uplink subframes 0, 1, 5 and 6 of the micro cell are muted. According to an HARQ timing relationship of FDD, an ACK/NACK corresponding to a PDSCH of downlink subframe 3 of the macro cell should be fed back in uplink subframe 3+4, but the uplink subframe 7 of the macro cell is muted. According to an HARQ timing relationship of FDD, an ACK/NACK corresponding to a PDSCH of downlink subframe 1 of the micro cell should be fed back in uplink subframe 1+4, but the uplink subframe 1+4 of the micro cell is muted.

According to the method provided by this embodiment, the timing relationship between a PDSCH and an uplink ACK/NACK of the macro cell applies the HARQ timing relationship of TDD configuration 1 shown in Table 1. In TDD configuration 1 shown in Table 1, 2, 3, 7 and 8 are uplink subframes, and the rest are downlink subframes, while uplink subframes of the macro cell are 0, 1, 5 and 6, and the rest are downlink subframes. Therefore, the uplink subframe configuration of TDD configuration 1 is different from the uplink and downlink configuration of the macro cell. The uplink and downlink configuration of TDD configuration 1 is on the same carrier, and the uplink and downlink subframes of the macro cell are configured on different carriers. After a radio frame header of the macro cell is shifted right by 2 subframes, downlink subframe 3 of the macro cell is aligned with downlink subframe 5 of TDD configuration 1, where an uplink ACK/NACK corresponding to a PDSCH in downlink subframe 5 of TDD configuration 1 is transmitted in uplink subframe 2 of TDD configuration 1, and uplink subframe 0 of the macro cell is aligned with uplink subframe 2 of TDD configuration 1. Therefore, according to the timing relationship between a PDSCH and an uplink ACK/NACK of TDD configuration 1, an uplink ACK/NACK corresponding to a PDSCH in downlink subframe 3 of the macro cell is fed back in uplink subframe 0 of the macro cell.

According to the method provided by this embodiment, the HARQ timing relationship of the micro cell, namely the timing relationship between a PDSCH and an uplink ACK/NACK, applies the timing relationship between a PDSCH and an uplink ACK/NACK of TDD configuration 0 shown in Table 1, where an ACK/NACK corresponding to a PDSCH in downlink subframe 1 of the micro cell is fed back in uplink subframe 7.

As shown in FIG. 3A, on a downlink carrier of a macro cell, downlink subframes used by the macro cell are 2, 3, 4, 7, 8, and 9, and downlink subframes 0, 1, 5 and 6 of the macro cell are muted. On a downlink carrier of a micro cell, downlink subframes used by the micro cell are 0, 1, 5 and 6, and downlink subframes 2, 3, 4, 7, 8, and 9 of the micro cell are muted.

According to an HARQ timing relationship of FDD, if a PUSCH, in uplink subframe 0+4 and scheduled by an UL_grant in downlink subframe 0 of the micro cell, is not transmitted correctly, the micro cell should transmit, in downlink subframe 4+4, a PHICH or the PUSCH scheduled by the UL_grant to be retransmitted, but downlink subframe 8 of the micro cell is muted. As shown in FIG. 3A, the timing relationship between an UL_grant and/or a PHICH and a PUSCH of the micro cell applies the HARQ timing relationship of TDD configuration 0 shown in Table 2, where, if a PUSCH in uplink subframe 0+4 of the micro cell is not transmitted correctly, the micro cell will transmit it in downlink subframe 0 of subframe 0.

As shown in FIG. 3A, the timing relationship between an UL_grant and/or a PHICH and a PUSCH of the macro cell applies the HARQ timing relationship of TDD configuration 1 shown in Table 2.

In the foregoing technical solution, the HARQ timing relationship corresponding to at least one serving cell in a heterogeneous network is the HARQ timing relationship corresponding to TDD configuration n, and the uplink and downlink configuration of TDD configuration n is different from the uplink and downlink configuration of the first serving cell. Furthermore, according to the HARQ timing relationship corresponding to TDD configuration n, an uplink ACK/NACK corresponding to at least one downlink subframe of the above serving cells can be transmitted in a corresponding uplink subframe, and a downlink ACK/NACK corresponding to a PUSCH of at least one uplink subframe of the above serving cells can be transmitted in a corresponding downlink subframe, thereby solving the HARQ timing problem caused by muting of a part of subframes of the serving cells.

With respect to the HARQ timing relationship corresponding to each serving cell of the at least two serving cells, another solution provided by this embodiment is: the at least two serving cells include at least one first serving cell, where a timing relationship of a first downlink subframe set of the first serving cell is an HARQ timing relationship of FDD, and a timing relationship of a second downlink subframe set of the first serving cell is an HARQ timing relationship of TDD. That is to say, in the first downlink subframe set of one serving cell of the at least two serving cells, data transmission is performed according to an HARQ timing relationship of FDD, and in the second downlink subframe set, data transmission is performed according to an HARQ timing relationship of TDD.

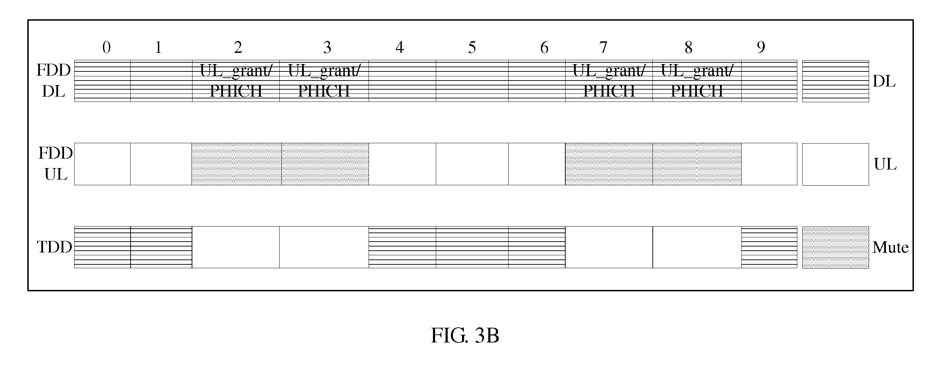

For example, the macro cell is an FDD system and the micro cell is a TDD system, and as shown in FIG. 3B, the TDD of the micro cell applies configuration 1 shown in Table 1. That is, uplink subframes used by the micro cell are 2, 3, 7, and 8, and downlink subframes used by the micro cell are 0, 1, 4, 5, 6, and 9. On an uplink carrier of the macro cell, uplink subframes 2, 3, 7, and 8 are muted, uplink subframes used by the macro cell are 0, 1, 4, 5, 6, and 9, and downlink subframes used by the macro cell are all subframes from 0 to 9. As uplink subframes 2, 3, 7, and 8 of the macro cell are muted, the downlink subframes 3, 4, 8, and 9 of the macro cell cannot transmit PDSCHs. In this case, after a radio frame header of an uplink carrier of the macro cell is shifted right by 1 subframe, uplink subframe 1 is aligned with uplink subframe 2 of TDD configuration 2, and uplink subframe 6 is aligned with uplink subframe 7 of TDD configuration 2, and transmission is performed according to the timing relationship from a PDSCH to an uplink ACK/NACK of TDD configuration 2, where uplink subframe 1 carries ACKs/NACKs corresponding to PDSCHs in downlink subframes 3, 4, 5, and 7, and uplink subframe 6 carries ACKs/NACKs corresponding to PDSCHs in downlink subframes 8, 9, 0, and 2. Therefore, the second downlink subframe set of the macro cell, including downlink subframes 0, 2, 3, 4, 5, 7, 8, and 9, may transmit data according to the timing from a PDSCH to an uplink ACK/NACK of TDD configuration 2. However, the first downlink subframe set, specifically including downlink subframes 1 and 6, may also transmit data according to the timing relationship from a PDSCH to an uplink ACK/NACK of FDD. That is, ACKs/NACKs corresponding to PDSCHs in downlink subframes 1 and 6 are respectively fed back in uplink subframes 5 and 0. This ensures that, in a case where a muted uplink subframe exists, all downlink subframes of the macro cell can be used for PDSCH transmission. For another example, if TDD configuration 3 and FDD timing are selected for the above two subframe sets, uplink ACKs/NACKs that are fed back can be carried on subframes 4, 5 and 6 according to TDD configuration 3. Therefore the second downlink subframe set may include subframes 0, 1, 2, 3, 7, 8, and 9; and the first downlink subframe set may include subframes 4, 5, and 6. But, for downlink subframe 4, according to the FDD timing, an ACK/NACK should be fed back in uplink subframe 8, but uplink subframe 8 is muted, and therefore it cannot be ensured that all downlink subframes can be scheduled.

In FIG. 3B, the macro cell has six uplink subframes, and for PUSCH scheduling of the macro cell, the timing relationship of TDD configuration 0 may be used. That is, UL_grants and/or PHICHs are transmitted in downlink subframes 2, 3, 7, and 8. This is because TDD configuration 0 also has six uplink subframes.

In a heterogeneous network formed by a macro cell and a micro cell, after the above technical solution is applied to provide service for a UE, the UE, without CA capability or with CA capability, can transmit data in different serving cells at different times, and the HARQ timing problem will not occur. The UE does not need to communicate with the network side device in one serving cell all the time, and information can be unloaded from the macro cell to the micro cell, thereby lightening the load of the macro cell.

In the foregoing technical solution, there is at least one second serving cell in the heterogeneous network, where, in a first downlink subframe set of the second serving cell, data transmission is performed according to an HARQ timing relationship of FDD, and in a second downlink subframe set of the second serving cell, data transmission is performed according to an HARQ timing relationship of TDD, so that all downlink subframes of the second serving cell can be used to transmit PDSCHs, where each PDSCH has a corresponding uplink ACK/NACK which can be fed back in a corresponding uplink subframe. Therefore, the technical problem that, because a part of subframes on an uplink carrier of the second serving cell are muted, an uplink ACK/NACK corresponding to a PDSCH of a corresponding downlink subframe on the downlink carrier cannot be fed back is solved.

Optionally, at one time, the terminal transmits data to the network side device in an uplink subframe of one serving cell of the at least two serving cells. That is, the terminal transmits data to the network side device in an uplink subframe of only one serving cell at one time.

Optionally, the terminal receives, at one time in a downlink subframe of one serving cell of the at least two serving cells, data transmitted by the network side device. That is, the terminal receives, at one time in a downlink subframe of only one serving cell, data transmitted by the network side device.

Optionally, in the at least two serving cells, at least one serving cell includes at least one flexible subframe, and an uplink subframe and/or a downlink subframe, which is of the same time as the flexible subframe, in at least one serving cell, is muted. Because the flexible subframe can be used dynamically in uplink or downlink, it is better to mute uplink subframes and/or downlink subframes, which are of the same time as the flexible subframe, on other carriers, so as to guarantee flexibility of the above flexible subframe.

Optionally, the at least two serving cells include one primary serving cell and at least one auxiliary serving cell; where subframe configuration information of the primary serving cell indicates that downlink subframes used by the terminal include a paging subframe for the terminal to receive a paging message; subframe configuration information of the at least one auxiliary serving cell indicates that downlink subframes used by the terminal include a synchronization subframe for transmitting a synchronization signal and/or a synchronization tracking signal; and the at least one auxiliary serving cell is a new carrier. The so-called new carrier means that an LTE UE of an early version, for example, UEs of version 8 to version 11, cannot be initially accessed to an LTE system through the new carrier. However, for a backward compatible carrier, an LTE UE of an early version can be initially accessed to an LTE system through the backward compatible carrier. The new carrier may have the following features: for example, on the new carrier, cell specific reference signals are only transmitted in subframes 0 and 5, and cell specific reference signals are used for time-frequency synchronization tracking, and the new carrier only supports data demodulation of UE specific reference signals and transmission of enhanced PDCCHs and the like.

The terminal receives, in the paging subframe of the primary serving cell, a paging message transmitted by the network side device. The terminal receives, in the synchronization subframe of the at least one auxiliary serving cell, a synchronization signal and/or a synchronization tracking signal transmitted by the network side device.

Optionally, in the at least two serving cells, radio frame headers of the serving cells are not aligned, so that more subframes can be used, which improves a utilization ratio of subframes.

In an LTE system, a radio frame includes ten subframes, and in a current CA system, radio frame headers among downlink carriers corresponding to a plurality of aggregated serving cells are synchronized. That is, if on downlink carrier 1 is a downlink subframe indexed by 0, at the same time on downlink carrier 2 is also a downlink subframe indexed by 0.

When the above rule supports UEs without a CA capability with respect to TDD CA with two different TDD configurations, such as aggregation of two TDD carriers with TDD configuration 1 (a ratio of uplink subframes to downlink subframe is 3:2) and TDD configuration 2 (4:1), there will be some loss in the resource utilization rate. For example, for TDD CA with aligned radio frame headers shown in FIG. 3(A), assuming that a UE has no uplink CA capability, in subframes 2 and 7, the UE can use uplink subframes of only one of the serving cells, which causes drop of the resource utilization rate; and for TDD CA with unaligned radio frame headers shown in FIG. 3(B), a UE without an uplink CA capability can use all subframes and the resource utilization rate is relatively high.

In the case of FDD+TDD CA, the above rule of frame header alignment is also subject to problems. For example, an FDD carrier in FDD+TDD CA is probably used in a macro cell, and a TDD carrier of a high frequency may be used in a micro cell. In this case, new carriers may be selected for carrier deployment. The so-called new carrier means that an LTE UE of an early version, for example, UEs of version 8 to version 11, cannot be initially accessed to an LTE system through the new carrier. However, for a backward compatible carrier, an LTE UE of an early version can be initially accessed to the LTE system through the backward compatible carrier. The new carrier has the following features: for example, on the new carrier, cell specific reference signals are only transmitted in subframes 0 and 5, and cell specific reference signals are used for time-frequency synchronization tracking, and the new carrier only supports data demodulation of UE specific reference signals and transmission of enhanced PDCCHs. In this case, for a UE without a downlink CA capability, if radio frame headers are aligned, subframes 0 and 5 of downlink carriers corresponding to the two serving cells are aligned. Therefore, the UE can only select one serving cell for using, and then time-frequency synchronization tracking of another serving cell cannot be performed. Therefore, a manner with unaligned radio frame headers may be applied, so that subframes, which transmit time-frequency synchronization tracking signals, of the two serving cells are staggered to make time-frequency synchronization tracking of both serving cells possible.

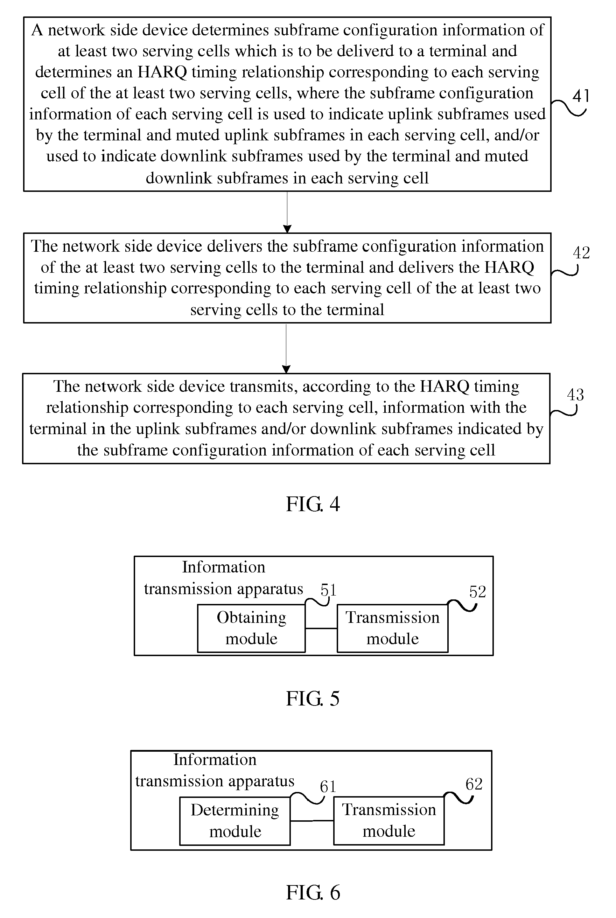

FIG. 4 is a flowchart of another information transmission method provided by an embodiment of the present invention. As shown in FIG. 4, the method provided by this embodiment includes the following steps:

Step 41: A network side device determines subframe configuration information of at least two serving cells which is to be delivered to a terminal and determines an HARQ timing relationship corresponding to each serving cell of the at least two serving cells, where the subframe configuration information of each serving cell is used to indicate uplink subframes used by the terminal and muted uplink subframes in each serving cell, and/or used to indicate downlink subframes used by the terminal and muted downlink subframes in each serving cell.

Step 42: The network side device delivers the subframe configuration information of the at least two serving cells to the terminal and delivers the HARQ timing relationship corresponding to each serving cell of the at least two serving cells to the terminal.

Step 43: The network side device transmits, according to the HARQ timing relationship corresponding to each serving cell, information with the terminal in the uplink subframes and/or downlink subframes indicated by the subframe configuration information of each serving cell.

With respect to the HARQ timing relationship corresponding to each serving cell of the at least two serving cells, a solution is as follows:

The at least two serving cells include at least one first serving cell, where an HARQ timing relationship corresponding to the first serving cell is an HARQ timing relationship corresponding to TDD configuration n, and an uplink and downlink configuration of TDD configuration n is different from an uplink and downlink configuration of the first serving cell; according to the HARQ timing relationship corresponding to TDD configuration n, an uplink ACK/NACK corresponding to at least one downlink subframe of the first serving cell can be transmitted in a corresponding uplink subframe, or, according to the HARQ timing relationship corresponding to TDD configuration n, a downlink ACK/NACK corresponding to a PUSCH of at least one uplink subframe of the first serving cell can be transmitted in a corresponding downlink subframe; and a TDD system has N uplink and downlink configurations, where n is a natural number that is less than or equal to 0 and greater than or equal to N-1;

Optionally, when the HARQ timing relationship corresponding to TDD configuration n is applied, in the first serving cell, uplink ACKs/NACKs corresponding to PDSCHs of P downlink subframes can be fed back in uplink subframes, and when an original HARQ timing relationship of the first serving cell is applied, in the first serving cell, uplink ACKs/NACKs corresponding to PDSCHs of Q downlink subframes can be fed back in uplink subframes, where P is greater than Q and both P and Q are natural numbers; and/or,
when the HARQ timing relationship corresponding to TDD configuration n is applied, in the first serving cell, downlink ACKs/NACKs corresponding to PUSCHs of M uplink subframes can be transmitted in downlink subframes, and when an original HARQ timing relationship of the first serving cell is applied, in the first serving cell, downlink ACKs/NACKs corresponding to PUSCHs of N uplink subframes can be transmitted in downlink subframes, where M is greater than N and both M and N are natural numbers;
where the original HARQ timing relationship of the first serving cell is an HARQ timing relationship that is applied when no uplink or downlink subframe of the first serving cell is muted.

With respect to the HARQ timing relationship corresponding to each serving cell of the at least two serving cells, another solution is as follows:
the at least two serving cells include at least one first serving cell, where a timing relationship of a first downlink subframe set of the first serving cell is an HARQ timing relationship of FDD, and a timing relationship of a second downlink subframe set of the first serving cell is an HARQ timing relationship of TDD.

For the foregoing technical solutions, reference may be made to descriptions in the embodiment corresponding to FIG. 2, and no further details will be described.

FIG. 5 is a schematic structural diagram of an information transmission apparatus provided by the present invention. As shown in FIG. 5, the apparatus provided by this embodiment includes: an obtaining module 51 and a transmission module 52.

The obtaining module 51 is configured to obtain subframe configuration information of at least two serving cells, and obtain an HARQ timing relationship corresponding to each serving cell of the at least two serving cells, where the subframe configuration information of each serving cell of the at least two serving cells is used to indicate uplink subframes used by the terminal and muted uplink subframes in each serving cell, and/or used to indicate downlink subframes used by the terminal and muted downlink subframes in each serving cell.

Optionally, the HARQ timing relationship includes: a timing relationship from a PDSCH to an uplink ACK/NACK, and/or, a timing relationship from a PUSCH to a downlink ACK/NACK.

Optionally, subframe configuration information of different serving cells of the at least two serving cells indicates that uplink subframes used by the terminal do not overlap at all or partly overlap; and/or, indicates that downlink subframes used by the terminal do not overlap at all or partly overlap.

Optionally, radio frame headers of the at least two serving cells are not aligned.

The transmission module 52 is configured to transmit, according to the HARQ timing relationship corresponding to each serving cell of the at least two serving cells, information with a network side device in the uplink subframes and/or downlink subframes indicated by the subframe configuration information of each serving cell.

The HARQ timing relationship applied when the transmission module 52 transmits information with the network side device may be as follows: the at least two serving cells include at least one first serving cell, where an HARQ timing relationship corresponding to the first serving cell is an HARQ timing relationship corresponding to TDD configuration n, and an uplink and downlink configuration of TDD configuration n is different from an uplink and downlink configuration of the first serving cell; according to the HARQ timing relationship corresponding to TDD configuration n, an uplink ACK/NACK corresponding to at least one downlink subframe of the first serving cell can be transmitted in a corresponding uplink subframe, and/or, according to the HARQ timing relationship corresponding to TDD configuration n, a downlink ACK/NACK corresponding to a PUSCH of at least one uplink subframe of the first serving cell can be transmitted in a corresponding downlink subframe; and a TDD system has N uplink and downlink configurations, where n is a natural number that is less than or equal to 0 and greater than or equal to N-1.

In the foregoing technical solution, in a heterogeneous network, the HARQ timing relationship corresponding to at least one serving cell is the HARQ timing relationship corresponding to TDD configuration n, and the uplink and downlink configuration of TDD configuration n is different from the uplink and downlink configuration of the first serving cell. Furthermore, according to the HARQ timing relationship corresponding to TDD configuration n, an uplink ACK/NACK corresponding to at least one downlink subframe of the above serving cells can be transmitted in a corresponding uplink subframe, and a downlink ACK/NACK corresponding to a PUSCH of at least one uplink subframe of the above serving cells can be transmitted in a corresponding downlink subframe, thereby solving the HARQ timing problem caused by muting of a part of subframes of the serving cells.

Optionally, when the HARQ timing relationship corresponding to TDD configuration n is applied, in the first serving cell, uplink ACKs/NACKs corresponding to PDSCHs of P downlink subframes can be fed back in uplink subframes, and when an original HARQ timing relationship of the first serving cell is applied, in the first serving cell, uplink ACKs/NACKs corresponding to PDSCHs of Q downlink subframes can be fed back in uplink subframes, where P is greater than Q and both P and Q are natural numbers; and/or,
when the HARQ timing relationship corresponding to TDD configuration n is applied, in the first serving cell, downlink ACKs/NACKs corresponding to PUSCHs of M uplink subframes can be transmitted in downlink subframes, and when an original HARQ timing relationship of the first serving cell is applied, in the first serving cell, downlink ACKs/NACKs corresponding to PUSCHs of N uplink subframes can be transmitted in downlink subframes, where M is greater than N and both M and N are natural numbers;
where the original HARQ timing relationship of the first serving cell is an HARQ timing relationship that is applied when no uplink or downlink subframe of the first serving cell is muted.

In the foregoing technical solution, in the heterogeneous network, in a first downlink subframe set of at least one first serving cell, data transmission is performed according to an HARQ timing relationship of FDD, and in a second downlink subframe set of the serving cell, data transmission is performed according to an HARQ timing relationship of TDD, so that all downlink subframes of the second serving cell can be used to transmit PDSCHs, where each PDSCH has a corresponding uplink ACK/NACK which can be fed back in a corresponding uplink subframe. Therefore, the technical problem that, because a part of subframes on an uplink carrier of the serving cell are muted, an uplink ACK/NACK corresponding to a PDSCH of a corresponding downlink subframe on a downlink carrier cannot be fed back is solved.

The HARQ timing relationship applied when the transmission module 52 transmits information with the network side device may also be as follows: the at least two serving cells include at least one first serving cell, where a timing relationship of a first downlink subframe set of the first serving cell is an HARQ timing relationship of FDD, and a timing relationship of a second downlink subframe subframe set of the first serving cell is an HARQ timing relationship of TDD.

Optionally, in at least two serving cells, at least one serving cell includes at least one flexible subframe, and an uplink subframe or a downlink subframe, which is of the same time as the flexible subframe, in at least one serving cell, is muted. Because the flexible subframe can be used dynamically in uplink or downlink, it is better to mute uplink subframes and/or downlink subframes, which are of the same time as the flexible subframe, on other carriers, so as to guarantee flexibility of the above flexible subframe.

Optionally, the at least two serving cells include one primary serving cell and at least one auxiliary serving cell; subframe configuration information of the primary serving cell indicates that downlink subframes used by the terminal include a paging subframe for the terminal to receive a paging message; subframe configuration information of the at least one auxiliary serving cell indicates that downlink subframes used by the terminal include a synchronization subframe for transmitting a synchronization signal and/or a synchronization tracking signal; and the at least one auxiliary serving cell is a new carrier. The so-called new carrier means, an LTE UE of an early version, for example, UEs of version 8 to version 11, cannot be initially accessed to an LTE system through the new carrier. However, for a backward compatible carrier, an LTE UE of an early version can be initially accessed to an LTE system through the backward compatible carrier. The new carrier has the following features: for example, on the new carrier, cell specific reference signals are only transmitted in subframes 0 and 5, and cell specific reference signals are used for time-frequency synchronization tracking, and the new carrier only supports data demodulation of UE specific reference signals and transmission of enhanced PDCCHs.

Optionally, the transmission module is further configured to transmit data to the network side device in an uplink subframe of one serving cell of the at least two serving cells at one time; or, receive, at one time in a downlink subframe of one serving cell of the at least two serving cells, data transmitted by the network side device.

Optionally, the at least two serving cells include one primary serving cell and at least one auxiliary serving cell; subframe configuration information of the primary serving cell indicates that downlink subframes used by the apparatus include a paging subframe for the apparatus to receive a paging message; and subframe configuration information of the at least one auxiliary serving cell indicates that downlink subframes used by the apparatus include a synchronization subframe for transmitting a synchronization signal and/or a synchronization tracking signal. The transmission module is further configured to receive, in the paging subframe of the primary serving cell, a paging message transmitted by the network side device; and/or, receive, in the synchronization subframe of the at least one auxiliary serving cell, a synchronization signal and/or a synchronization tracking signal transmitted by the network side device.

Optionally, in the at least two serving cells, at least one serving cell includes one carrier.

Optionally, among corresponding uplink and downlink carriers in the at least two serving cells, one uplink carrier corresponds to one or more downlink carriers.

Optionally, the at least two serving cells include two TDD serving cells; and/or, the at least two serving cells include one FDD serving cell and one TDD serving cell.

FIG. 6 is a schematic structural diagram of another information transmission apparatus provided by the present invention. As shown in FIG. 6, the apparatus provided by this embodiment includes: a determining module 61 and a transmission module 62.

The determining module 61 is configured to determine subframe configuration information of at least two serving cells which is to be delivered to a terminal, and determine an HARQ timing relationship corresponding to each serving cell of the at least two serving cells, where the subframe configuration information of each serving cell is used to indicate uplink subframes used by the terminal and muted uplink subframes in each serving cell, and/or used to indicate downlink subframes used by the terminal and muted downlink subframes in each serving cell.

Optionally, the HARQ timing relationship includes: a timing relationship from a PDSCH to an uplink ACK/NACK, and/or, a timing relationship from a PUSCH to a downlink ACK/NACK.

Optionally, subframe configuration information of different serving cells of the at least two serving cells indicates that uplink subframes used by the terminal do not overlap at all or partly overlap; and/or, indicates that downlink subframes used by the terminal do not overlap at all or partly overlap.

The transmission module 62 is configured to deliver the subframe configuration information of the at least two serving cells to the terminal and deliver the HARQ timing relationship corresponding to each serving cell of the at least two serving cells to the terminal.

The transmission module 62 is further configured to transmit, according to the HARQ timing relationship corresponding to each serving cell, information with the terminal in the uplink subframes and/or downlink subframes indicated by the subframe configuration information of each serving cell.

When the transmission module 62 transmits information with the terminal, the following HARQ timing relationship may be applied: the at least two serving cells include at least one first serving cell, where an HARQ timing relationship corresponding to the first serving cell is an HARQ timing relationship corresponding to TDD configuration n, and an uplink and downlink configuration of TDD configuration n is different from an uplink and downlink configuration of the first serving cell; according to the HARQ timing relationship corresponding to TDD configuration n, an uplink ACK/NACK corresponding to at least one downlink subframe of the first serving cell can be transmitted in a corresponding uplink subframe, or, according to the HARQ timing relationship corresponding to TDD configuration n, a downlink ACK/NACK corresponding to a PUSCH of at least one uplink subframe of the first serving cell can be transmitted in a corresponding downlink subframe; and a TDD system has N uplink and downlink configurations, where n is a natural number that is less than or equal to 0 and greater than or equal to N-1.

Optionally, when the HARQ timing relationship corresponding to TDD configuration n is applied, in the first serving cell, uplink ACKs/NACKs corresponding to PDSCHs of P downlink subframes can be fed back in uplink subframes, and when an original HARQ timing relationship of the first serving cell is applied, in the first serving cell, uplink ACKs/NACKs corresponding to PDSCHs of Q downlink subframes can be fed back in uplink subframes, where P is greater than Q and both P and Q are natural numbers; and/or,
when the HARQ timing relationship corresponding to TDD configuration n is applied, in the first serving cell, downlink ACKs/NACKs corresponding to PUSCHs of M uplink subframes can be transmitted in downlink subframes, and when an original HARQ timing relationship of the first serving cell is applied, in the first serving cell, downlink ACKs/NACKs corresponding to PUSCHs of N uplink subframes can be transmitted in downlink subframes, where M is greater than N and both M and N are natural numbers;
where the original HARQ timing relationship of the first serving cell is an HARQ timing relationship that is applied when no uplink or downlink subframe of the first serving cell is muted.

In the foregoing technical solution, in a heterogeneous network, the HARQ timing relationship corresponding to at least one serving cell is the HARQ timing relationship corresponding to TDD configuration n, and the uplink and downlink configuration of TDD configuration n is different from the uplink and downlink configuration of the first serving cell. Furthermore, according to the HARQ timing relationship corresponding to TDD configuration n, an uplink ACK/NACK corresponding to at least one downlink subframe of the above serving cells can be transmitted in a corresponding uplink subframe, and a downlink ACK/NACK corresponding to a PUSCH of at least one uplink subframe of the above serving cells can be transmitted in a corresponding downlink subframe, thereby solving the HARQ timing problem caused by muting of a part of subframes of the serving cells.

When the transmission module 62 transmits information with the terminal, the following HARQ timing relationship may also be applied: the at least two serving cells include at least one first serving cell, where a timing relationship of a first downlink subframe set of the first serving cell is an HARQ timing relationship of FDD, and a timing relationship of a second downlink subframe set of the first serving cell is an HARQ timing relationship of TDD.

In the foregoing technical solution, in the heterogeneous network, in the first downlink subframe set of at least one serving cell, data transmission is performed according to an HARQ timing relationship of FDD, and in the second downlink subframe set of the serving cell, data transmission is performed according to an HARQ timing relationship of TDD, so that all downlink subframes of the second serving cell can be used to transmit PDSCHs, where each PDSCH has a corresponding uplink ACK/NACK which can be fed back in a corresponding uplink subframe. Therefore, the technical problem that, because a part of subframes on an uplink carrier of the serving cell are muted, an uplink ACK/NACK corresponding to a PDSCH of a corresponding downlink subframe on a downlink carrier cannot be fed back is solved.

Optionally, in the at least two serving cells, at least one serving cell includes at least one flexible subframe, and an uplink subframe and/or a downlink subframe, which is of the same time as the flexible subframe, in at least on serving cell, is muted. Because the flexible subframe can be used dynamically in uplink or downlink, it is better to mute uplink subframes and/or downlink subframes, which are of the same time as the flexible subframe, on other carriers, so as to guarantee flexibility of the above flexible subframe.

Optionally, in the at least two serving cells, at least one serving cell includes one carrier. Optionally, among corresponding uplink and downlink carriers in the at least two serving cells, one uplink carrier corresponds to one or more downlink carriers.

Optionally, the at least two serving cells include two TDD serving cells; and/or, the at least two serving cells include one FDD serving cell and one TDD serving cell.

Optionally, at least one serving cell includes at least one flexible subframe, and an uplink subframe or a downlink subframe, which is of the same time as the flexible subframe, in at least one serving cell, is muted.

Optionally, the transmission module is further configured to receive, at one time in an uplink subframe of one serving cell of the at least two serving cells, data transmitted by the terminal; or, transmit data to the terminal in a downlink subframe of one serving cell of the at least two serving cells at one time.

Optionally, the at least two serving cells include one primary serving cell and one auxiliary serving cell; subframe configuration information of the primary serving cell indicates that downlink subframes used by the terminal include a paging subframe for the network side device to transmit a paging message; and subframe configuration information of the auxiliary serving cell indicates that downlink subframes used by the terminal include a synchronization subframe for transmitting a synchronization signal and/or a synchronization tracking signal. The transmission module is further configured to transmit a paging message to the terminal in the paging subframe of the primary serving cell; and/or, transmit a synchronization signal and/or a synchronization tracking signal to the terminal in the synchronization subframe of the auxiliary serving cell.

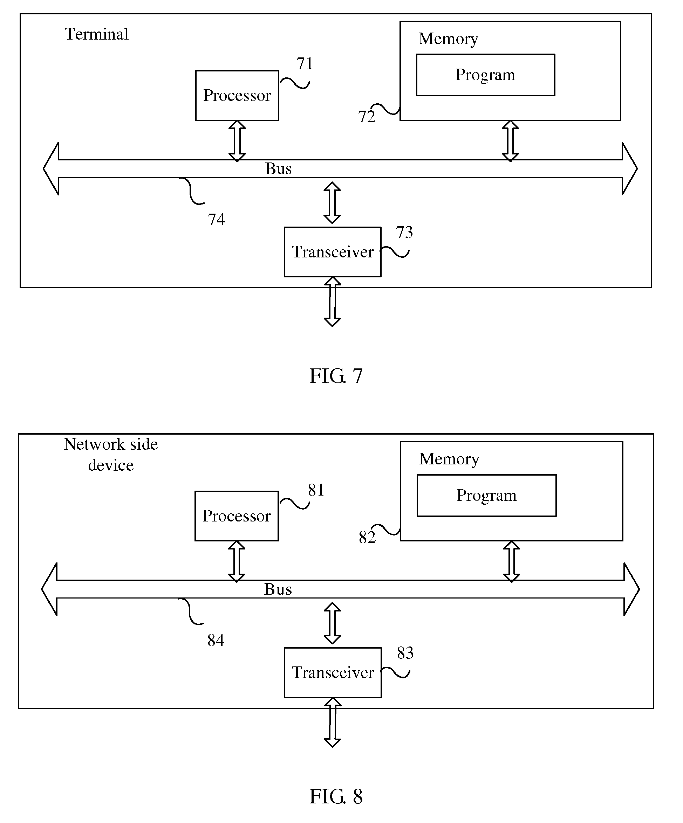

FIG. 7 is a schematic structural diagram of a terminal provided by an embodiment of the present invention. As shown in FIG. 7, the terminal provided by this embodiment includes: a processor 71, a memory 72, a transceiver 73, and a bus 74, where the processor 71, the memory 72, and the transceiver 73 are connected through the bus 74.

The memory 72 is configured to store a group of program code, and the processor 71 is configured to invoke the program code stored in the memory to execute the following operations:
obtaining subframe configuration information of at least two serving cells, and obtaining an HARQ timing relationship corresponding to each serving cell of the at least two serving cells, where the subframe configuration information of each serving cell of the at least two serving cells is used to indicate uplink subframes used by the terminal and muted uplink subframes in each serving cell, and/or used to indicate downlink subframes used by the terminal and muted downlink subframes in each serving cell; and
transmitting, according to the HARQ timing relationship corresponding to each serving cell of the at least two serving cells, information with the network side device in the uplink subframes and/or downlink subframes indicated by the subframe configuration information of each serving cell.

One HARQ timing relationship corresponding to each serving cell may be as follows:
the at least two serving cells include at least one first serving cell, where an HARQ timing relationship corresponding to the first serving cell is an HARQ timing relationship corresponding to TDD configuration n, and an uplink and downlink configuration of TDD configuration n is different from an uplink and downlink configuration of the first serving cell; according to the HARQ timing relationship corresponding to TDD configuration n, an uplink ACK/NACK corresponding to at least one downlink subframe of the first serving cell can be transmitted in a corresponding uplink subframe, and/or, according to the HARQ timing relationship corresponding to TDD configuration n, a downlink ACK/NACK corresponding to a PUSCH of at least one uplink subframe of the first serving cell can be transmitted in a corresponding downlink subframe; and a TDD system has N uplink and downlink configurations, where n is a natural number that is less than or equal to 0 and greater than or equal to N-1, and N is a natural number that is greater than or equal to 1.

Further, when the HARQ timing relationship corresponding to TDD configuration n is applied, in the first serving cell, uplink ACKs/NACKs corresponding to PDSCHs of P downlink subframes can be fed back in uplink subframes, and when an original HARQ timing relationship of the first serving cell is applied, in the first serving cell, uplink ACKs/NACKs corresponding to PDSCHs of Q downlink subframes can be fed back in uplink subframes, where P is greater than Q and both P and Q are natural numbers; and/or,
when the HARQ timing relationship corresponding to TDD configuration n is applied, in the first serving cell, downlink ACKs/NACKs corresponding to PUSCHs of M uplink subframes can be transmitted in downlink subframes, and when an original HARQ timing relationship of the first serving cell is applied, in the first serving cell, downlink ACKs/NACKs corresponding to PUSCHs of N uplink subframes can be transmitted in downlink subframes, where M is greater than N and both M and N are natural numbers;
where the original HARQ timing relationship of the first serving cell is an HARQ timing relationship that is applied when no uplink or downlink subframe of the first serving cell is muted.

Another HARQ timing relationship corresponding to each serving cell may be as follows:
the at least two serving cells include at least one first serving cell, where a timing relationship of a first downlink subframe set of the first serving cell is an HARQ timing relationship of FDD, and a timing relationship of a second downlink subframe set of the first serving cell is an HARQ timing relationship of TDD.

Both the above HARQ timing relationship solutions may have the following optional features:

Optionally, the HARQ timing relationship includes: a timing relationship from a PDSCH to an uplink ACK/NACK, and/or, a timing relationship from a PUSCH to a downlink ACK/NACK.

Optionally, sub frame configuration information of different serving cells of the at least two serving cells indicates that uplink subframes used by the terminal do not overlap at all or partly overlap; and/or, indicates that downlink subframes used by the terminal do not overlap at all or partly overlap.

Optionally, radio frame headers of the at least two serving cells are not aligned.

Optionally, the at least two serving cells include one primary serving cell and at least one auxiliary serving cell; subframe configuration information of the primary serving cell indicates that downlink subframes used by the terminal include a paging subframe for the network side device to transmit a paging message; and subframe configuration information of the at least one auxiliary serving cell indicates that downlink subframes used by the terminal include a synchronization subframe for transmitting a synchronization signal and/or a synchronization tracking signal; and
the processor is further configured to execute the following operations: receiving, in the paging subframe of the primary serving cell, a paging message transmitted by the network side device; and/or, receiving, in the synchronization subframe of the at least one auxiliary serving cell, a synchronization signal and/or a synchronization tracking signal transmitted by the network side device.

Optionally, in the at least two serving cells, at least one serving cell includes one carrier. Optionally, among corresponding uplink and downlink carriers in the at least two serving cells, one uplink carrier corresponds to one or more downlink carriers.

Optionally, the at least two serving cells include two TDD serving cells; and/or, the at least two serving cells include one FDD serving cell and one TDD serving cell.

Optionally, at least one serving cell includes at least one flexible subframe, and an uplink subframe or a downlink subframe, which is of the same time as the flexible subframe, in at least one serving cell, is muted.

The terminal shown in FIG. 7 can be configured to implement the method provided by the method embodiment corresponding to FIG. 2.

FIG. 8 is a schematic structural diagram of a network side device provided by an embodiment of the present invention. As shown in FIG. 8, the device provided by this embodiment includes: a processor 81, a memory 82, a transceiver 83, and a bus 84, where the processor, the memory, and the transceiver are connected through the bus.

The memory 82 is configured to store a group of program code, and the processor 81 is configured to invoke the program code stored in the memory to execute the following operations:
determining subframe configuration information of at least two serving cells which is to be delivered to a terminal and determining an HARQ timing relationship corresponding to each serving cell of the at least two serving cells, where the subframe configuration information of each serving cell is used to indicate uplink subframes used by the terminal and muted uplink subframes in each serving cell, and/or used to indicate downlink subframes used by the terminal and muted downlink subframes in each serving cell;
delivering the subframe configuration information of the at least two serving cells to the terminal and delivering the HARQ timing relationship corresponding to each serving cell of the at least two serving cells to the terminal; and
transmitting, according to the HARQ timing relationship corresponding to each serving cell, information with the terminal in the uplink subframes and/or downlink subframes indicated by the subframe configuration information of each serving cell.

With respect to the HARQ timing relationship corresponding to each serving cell, one solution is as follows:
the at least two serving cells include at least one first serving cell, where an HARQ timing relationship corresponding to the first serving cell is an HARQ timing relationship corresponding to TDD configuration n, and an uplink and downlink configuration of TDD configuration n is different from an uplink and downlink configuration of the first serving cell; according to the HARQ timing relationship corresponding to TDD configuration n, an uplink ACK/NACK corresponding to at least one downlink subframe of the first serving cell can be transmitted in a corresponding uplink subframe, or, according to the HARQ timing relationship corresponding to TDD configuration n, a downlink ACK/NACK corresponding to a PUSCH of at least one uplink subframe of the first serving cell can be transmitted in a corresponding downlink subframe; and a TDD system has N uplink and downlink configurations, where n is a natural number that is less than or equal to 0 and greater than or equal to N-1, and N is a natural number that is greater than or equal to 1.

Further, when the HARQ timing relationship corresponding to TDD configuration n is applied, in the first serving cell, uplink ACKs/NACKs corresponding to PDSCHs of P downlink subframes can be fed back in uplink subframes, and when an original HARQ timing relationship of the first serving cell is applied, in the first serving cell, uplink ACKs/NACKs corresponding to PDSCHs of Q downlink subframes can be fed back in uplink subframes, where P is greater than Q and both P and Q are natural numbers; and/or,
when the HARQ timing relationship corresponding to TDD configuration n is applied, in the first serving cell, downlink ACKs/NACKs corresponding to PUSCHs of M uplink subframes can be transmitted in downlink subframes, and when an original HARQ timing relationship of the first serving cell is applied, in the first serving cell, downlink ACKs/NACKs corresponding to PUSCHs of N uplink subframes can be transmitted in downlink subframes, where M is greater than N and both M and N are natural numbers;
where the original HARQ timing relationship of the first serving cell is an HARQ timing relationship that is applied when no uplink or downlink subframe of the first serving cell is muted.

With respect to the HARQ timing relationship corresponding to each serving cell, another solution is as follows:
the at least two serving cells include at least one first serving cell, where a timing relationship of a first downlink subframe set of the first serving cell is an HARQ timing relationship of FDD, and a timing relationship of a second downlink subframe set of the first serving cell is an HARQ timing relationship of TDD.

Both the above HARQ timing relationship solutions may have the following optional features:

Optionally, the HARQ timing relationship includes: a timing relationship from a PDSCH to an uplink ACK/NACK, and/or, a timing relationship from a PUSCH to a downlink ACK/NACK.

Optionally, subframe configuration information of different serving cells of the at least two serving cells indicates that uplink subframes used by the terminal do not overlap at all or partly overlap, and/or, indicates that downlink subframes used by the terminal do not overlap at all or partly overlap.

Optionally, radio frame headers of the at least two serving cells are not aligned.

Optionally, the at least two serving cells include one primary serving cell and at least one auxiliary serving cell; subframe configuration information of the primary serving cell indicates that downlink subframes used by the terminal include a paging subframe for the network side device to transmit a paging message; and subframe configuration information of the at least one auxiliary serving cell indicates that downlink subframes used by the terminal include a synchronization subframe for transmitting a synchronization signal and/or a synchronization tracking signal; and
the processor is further configured to execute the following operations: transmitting a paging message to the terminal in the paging subframe of the primary serving cell; and/or, transmitting a synchronization signal and/or a synchronization tracking signal to the terminal in the synchronization subframe of the at least one auxiliary serving cell.

Optionally, in the at least two serving cells, at least one serving cell includes one carrier. Optionally, among corresponding uplink and downlink carriers in the at least two serving cells, one uplink carrier corresponds to one or more downlink carriers.

Optionally, the at least two serving cells include two TDD serving cells; and/or, the at least two serving cells include one FDD serving cell and one TDD serving cell.

Optionally, at least one serving cell includes at least one flexible subframe, and an uplink subframe or a downlink subframe, which is of the same time as the flexible subframe, in at least one serving cell, is muted.

The network side device shown in FIG. 8 can be configured to implement the method provided by the method embodiment corresponding to FIG. 4.

Persons of ordinary skill in the art may understand that, all or a part of the steps of the foregoing method embodiments may be implemented by a program instructing relevant hardware. The foregoing program may be stored in a computer readable storage medium. When the program runs, the steps of the foregoing method embodiments are performed. The foregoing storage mediums include various mediums capable of storing program code, such as an ROM, an RAM, a magnetic disk, or an optical disc.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some or all the technical features thereof, as long as such modifications or replacements do not cause the essence of corresponding technical solutions to depart from the scope of the technical solutions of the embodiments of the present invention.

## Claims

1. An information transmission method, comprising:
obtaining, by a terminal, subframe configuration information of at least two serving cells, and obtaining an HARQ timing relationship corresponding to each serving cell of the at least two serving cells, wherein the subframe configuration information of each serving cell of the at least two serving cells is used to indicate uplink subframes used by the terminal and muted uplink subframes in each serving cell, and/or used to indicate downlink subframes used by the terminal and muted downlink subframes in each serving cell; and
transmitting, by the terminal according to the HARQ timing relationship corresponding to each serving cell of the at least two serving cells, information with a network side device in the uplink subframes and/or downlink subframes indicated by the subframe configuration information of each serving cell;
wherein, the at least two serving cells comprise at least one first serving cell, wherein an HARQ timing relationship corresponding to the first serving cell is an HARQ timing relationship corresponding to TDD configuration n, and an uplink and downlink configuration of TDD configuration n is different from an uplink and downlink configuration of the first serving cell; according to the HARQ timing relationship corresponding to TDD configuration n, an uplink ACK/NACK corresponding to at least one downlink subframe of the first serving cell can be transmitted in a corresponding uplink subframe, and/or, according to the HARQ timing relationship corresponding to TDD configuration n, a downlink ACK/NACK corresponding to a PUSCH of at least one uplink subframe of the first serving cell can be transmitted in a corresponding downlink subframe; and a TDD system has N uplink and downlink configurations, wherein n is a natural number that is less than or equal to N-1 and greater than or equal to 0, and N is a natural number that is greater than or equal to 1;
or, a timing relationship of a first downlink subframe set of the first serving cell is an HARQ timing relationship of FDD, and a timing relationship of a second downlink subframe set of the first serving cell is an HARQ timing relationship of TDD.

2. The method according to claim 1, wherein:
when the HARQ timing relationship corresponding to TDD configuration n is applied, in the first serving cell, uplink ACKs/NACKs corresponding to PDSCHs of P downlink subframes can be fed back in uplink subframes, and when an original HARQ timing relationship of the first serving cell is applied, in the first serving cell, uplink ACKs/NACKs corresponding to PDSCHs of Q downlink subframes can be fed back in uplink subframes, wherein P is greater than Q and both P and Q are natural numbers; and/or,
when the HARQ timing relationship corresponding to TDD configuration n is applied, in the first serving cell, downlink ACKs/NACKs corresponding to PUSCHs of M uplink subframes can be transmitted in downlink subframes, and when an original HARQ timing relationship of the first serving cell is applied, in the first serving cell, downlink ACKs/NACKs corresponding to PUSCHs of N uplink subframes can be transmitted in downlink subframes, wherein M is greater than N and both M and N are natural numbers;
wherein the original HARQ timing relationship of the first serving cell is an HARQ timing relationship that is applied when no uplink or downlink subframe of the first serving cell is muted.

3. The method according to claim 1 or 2, wherein the HARQ timing relationship comprises: a timing relationship from a PDSCH to an uplink ACK/NACK, and/or, a timing relationship from a PUSCH to a downlink ACK/NACK.

4. The method according to claim 1, 2, or 3, wherein, the subframe configuration information of each serving cell of the at least two serving cells indicates that uplink subframes used by the terminal do not overlap at all or partly overlap, and/or, indicates that downlink subframes used by the terminal do not overlap at all or partly overlap.

5. The method according to any one of claims 1 to 4, wherein, radio frame headers of each serving cell of the at least two serving cells are not aligned.

6. The method according to any one of claims 1 to 5, wherein the at least two serving cells comprise one primary serving cell and at least one auxiliary serving cell; subframe configuration information of the primary serving cell indicates that downlink subframes used by the terminal comprise a paging subframe for the terminal to receive a paging message; and subframe configuration information of the at least one auxiliary serving cell indicates that downlink subframes used by the terminal comprise a synchronization subframe for transmitting a synchronization signal and/or a synchronization tracking signal; and
the transmitting, by the terminal according to the HARQ timing relationship corresponding to each serving cell of the at least two serving cells, information with a network side device in the uplink subframes and/or downlink subframes indicated by the subframe configuration information of each serving cell comprises:
receiving, by the terminal in the paging subframe of the primary serving cell, a paging message transmitted by the network side device; and/or,
receiving, by the terminal in the synchronization subframe of the auxiliary serving cell, a synchronization signal and/or a synchronization tracking signal transmitted by the network side device.

7. The method according to any one of claims 1 to 6, wherein, in the at least two serving cells, at least one serving cell comprises one carrier, or, among corresponding uplink and downlink carriers in the at least two serving cells, one uplink carrier corresponds to one or more downlink carriers.

8. The method according to any one of claims 1 to 7, wherein the at least two serving cells comprise two TDD serving cells; and/or, the at least two serving cells comprise one FDD serving cell and one TDD serving cell.

9. The method according to any one of claims 1 to 8, wherein, in the at least two serving cells, at least one serving cell comprises at least one flexible subframe, and an uplink subframe or a downlink subframe, which is of the same time as the flexible subframe, in at least one serving cell is muted.

10. An information transmission method, comprising:
determining, by a network side device, subframe configuration information of at least two serving cells which is to be delivered to a terminal, and determining an HARQ timing relationship corresponding to each serving cell of the at least two serving cells, wherein the subframe configuration information of each serving cell is used to indicate uplink subframes used by the terminal and muted uplink subframes in each serving cell, and/or used to indicate downlink subframes used by the terminal and muted downlink subframes in each serving cell;
delivering, by the network side device, the subframe configuration information of the at least two serving cells to the terminal, and delivering the HARQ timing relationship corresponding to each serving cell of the at least two serving cells to the terminal; and
transmitting, by the network side device according to the HARQ timing relationship corresponding to each serving cell, information with the terminal in the uplink subframes and/or downlink subframes indicated by the subframe configuration information of each serving cell;
wherein the at least two serving cells comprise at least one first serving cell, wherein an HARQ timing relationship corresponding to the first serving cell is an HARQ timing relationship corresponding to TDD configuration n, and an uplink and downlink configuration of TDD configuration n is different from an uplink and downlink configuration of the first serving cell; according to the HARQ timing relationship corresponding to TDD configuration n, an uplink ACK/NACK corresponding to at least one downlink subframe of the first serving cell can be transmitted in a corresponding uplink subframe, and/or, according to the HARQ timing relationship corresponding to TDD configuration n, a downlink ACK/NACK corresponding to a PUSCH of at least one uplink subframe of the first serving cell can be transmitted in a corresponding downlink subframe; and a TDD system has N uplink and downlink configurations, wherein n is a natural number that is less than or equal to 0 and greater than or equal to N-1, and N is a natural number that is greater than or equal to 1;
or,
a timing relationship of a first downlink subframe set of the first serving cell is an HARQ timing relationship of FDD, and a timing relationship of a second downlink subframe set of the first serving cell is an HARQ timing relationship of TDD.

11. The method according to claim 10, wherein:
when the HARQ timing relationship corresponding to TDD configuration n is applied, in the first serving cell, uplink ACKs/NACKs corresponding to PDSCHs of P downlink subframes can be fed back in uplink subframes, and when an original HARQ timing relationship of the first serving cell is applied, in the first serving cell, uplink ACKs/NACKs corresponding to PDSCHs of Q downlink subframes can be fed back in uplink subframes, wherein P is greater than Q and both P and Q are natural numbers; and/or,
when the HARQ timing relationship corresponding to TDD configuration n is applied, in the first serving cell, downlink ACKs/NACKs corresponding to PUSCHs of M uplink subframes can be transmitted in downlink subframes, and when an original HARQ timing relationship of the first serving cell is applied, in the first serving cell, downlink ACKs/NACKs corresponding to PUSCHs of N uplink subframes can be transmitted in downlink subframes, wherein M is greater than N and both M and N are natural numbers;
wherein the original HARQ timing relationship of the first serving cell is an HARQ timing relationship that is applied when no uplink or downlink subframe of the first serving cell is muted.

12. The method according to claim 10 or 11, wherein the HARQ timing relationship comprises: a timing relationship from a PDSCH to an uplink ACK/NACK, and/or, a timing relationship from a PUSCH to a downlink ACK/NACK.

13. The method according to claim 10, 11, or 12, wherein, subframe configuration information of different serving cells of the at least two serving cells indicates that uplink subframes used by the terminal do not overlap at all or partly overlap; and/or, indicates that downlink subframes used by the terminal do not overlap at all or partly overlap.

14. The method according to any one of claims 10 to 13, wherein, radio frame headers of each serving cell of the at least two serving cells are not aligned.

15. The method according to any one of claims 10 to 14, wherein the at least two serving cells comprise one primary serving cell and at least one auxiliary serving cell; subframe configuration information of the primary serving cell indicates that downlink subframes used by the terminal comprise a paging subframe for the network side device to transmit a paging message; and subframe configuration information of the at least one auxiliary serving cell indicates that downlink subframes used by the terminal comprise a synchronization subframe for transmitting a synchronization signal and/or a synchronization tracking signal; and
the transmitting, by the network side device according to the HARQ timing relationship corresponding to each serving cell, information with the terminal in the uplink subframes and/or downlink subframes indicated by the subframe configuration information of each serving cell comprises:
transmitting, by the network side device, a paging message to the terminal in the paging subframe of the primary serving cell; and/or,
transmitting, by the network side device, a synchronization signal and/or a synchronization tracking signal to the terminal in the synchronization subframe of the auxiliary serving cell.

16. The method according to any one of claims 10 to 15, wherein, in the at least two serving cells, at least one serving cell comprises one carrier, or, among corresponding uplink and downlink carriers in the at least two serving cells, one uplink carrier corresponds to one or more downlink carriers.

17. The method according to any one of claims 10 to 16, wherein the at least two serving cells comprise two TDD serving cells; and/or, the at least two serving cells comprise one FDD serving cell and one TDD serving cell.

18. The method according to any one of claims 10 to 17, wherein, in the at least two serving cells, at least one serving cell comprises at least one flexible subframe, and an uplink subframe or a downlink subframe, which is of the same time as the flexible subframe, in at least one serving cell is muted.

19. An information transmission apparatus, comprising:
an obtaining module, configured to obtain subframe configuration information of at least two serving cells and obtain an HARQ timing relationship corresponding to each serving cell of the at least two serving cells, wherein the subframe configuration information of each serving cell of the at least two serving cells is used to indicate uplink subframes used by the terminal and muted uplink subframes in each serving cell, and/or used to indicate downlink subframes used by the terminal and muted downlink subframes in each serving cell; and
a transmission module, configured to transmit, according to the HARQ timing relationship corresponding to each serving cell of the at least two serving cells, information with a network side device in the uplink subframes and/or downlink subframes indicated by the subframe configuration information of each serving cell;
wherein the at least two serving cells comprise at least one first serving cell, wherein an HARQ timing relationship corresponding to the first serving cell is an HARQ timing relationship corresponding to TDD configuration n, and an uplink and downlink configuration of TDD configuration n is different from an uplink and downlink configuration of the first serving cell; according to the HARQ timing relationship corresponding to TDD configuration n, an uplink ACK/NACK corresponding to at least one downlink subframe of the first serving cell can be transmitted in a corresponding uplink subframe, and/or, according to the HARQ timing relationship corresponding to TDD configuration n, a downlink ACK/NACK corresponding to a PUSCH of at least one uplink subframe of the first serving cell can be transmitted in a corresponding downlink subframe; and a TDD system has N uplink and downlink configurations, wherein n is a natural number that is less than or equal to 0and greater than or equal to N-1, and N is a natural number that is greater than or equal to 1;
or,
a timing relationship of a first downlink subframe set of the first serving cell is an HARQ timing relationship of FDD, and a timing relationship of a second downlink subframe set of the first serving cell is an HARQ timing relationship of TDD.

20. The apparatus according to claim 19, wherein:
when the HARQ timing relationship corresponding to TDD configuration n is applied, in the first serving cell, uplink ACKs/NACKs corresponding to PDSCHs of P downlink subframes can be fed back in uplink subframes, and when an original HARQ timing relationship of the first serving cell is applied, in the first serving cell, uplink ACKs/NACKs corresponding to PDSCHs of Q downlink subframes can be fed back in uplink subframes, wherein P is greater than Q and both P and Q are natural numbers; and/or,
when the HARQ timing relationship corresponding to TDD configuration n is applied, in the first serving cell, downlink ACKs/NACKs corresponding to PUSCHs of M uplink subframes can be transmitted in downlink subframes, and when an original HARQ timing relationship of the first serving cell is applied, in the first serving cell, downlink ACKs/NACKs corresponding to PUSCHs of N uplink subframes can be transmitted in downlink subframes, wherein M is greater than N and both M and N are natural numbers;
wherein the original HARQ timing relationship of the first serving cell is an HARQ timing relationship that is applied when no uplink or downlink subframe of the first serving cell is muted.

21. The apparatus according to claim 19 or 20, wherein the HARQ timing relationship comprises: a timing relationship from a PDSCH to an uplink ACK/NACK, and/or, a timing relationship from a PUSCH to a downlink ACK/NACK.

22. The apparatus according to any one of claims 19 to 21, wherein, subframe configuration information of different serving cells of the at least two serving cells indicates that uplink subframes used by the apparatus do not overlap at all or partly overlap; and/or, indicates that downlink subframes used by the apparatus do not overlap at all or partly overlap.

23. The apparatus according to any one of claims 19 to 22, wherein, radio frame headers of each serving cell of the at least two serving cells are not aligned.

24. The apparatus according to any one of claims 19 to 23, wherein the at least two serving cells comprise one primary serving cell and at least one auxiliary serving cell; subframe configuration information of the primary serving cell indicates that downlink subframes used by the apparatus comprise a paging subframe for the apparatus to receive a paging message; and subframe configuration information of the at least one auxiliary serving cell indicates that downlink subframes used by the apparatus comprise a synchronization subframe for transmitting a synchronization signal and/or a synchronization tracking signal; and
the transmission module is specifically configured to receive, in the paging subframe of the primary serving cell, a paging message transmitted by the network side device; and/or, receive, in the synchronization subframe of the at least one auxiliary serving cell, a synchronization signal and/or a synchronization tracking signal transmitted by the network side device.

25. The apparatus according to any one of claims 19 to 24, wherein, in the at least two serving cells, at least one serving cell comprises one carrier, or, among corresponding uplink and downlink carriers in the at least two serving cells, one uplink carrier corresponds to one or more downlink carriers.

26. The apparatus according to any one of claims 19 to 25, wherein the at least two serving cells comprise two TDD serving cells; and/or, the at least two serving cells comprise one FDD serving cell and one TDD serving cell.

27. The apparatus according to any one of claims 19 to 26, wherein, in the at least two serving cells, at least one serving cell comprises at least one flexible subframe, and an uplink subframe or a downlink subframe, which is of the same time as the flexible subframe, in at least one serving cell is muted.

28. An information transmission apparatus, comprising:
a determining module, configured to determine subframe configuration information of at least two serving cells which is to be delivered to a terminal, and determine an HARQ timing relationship corresponding to each serving cell of the at least two serving cells, wherein the subframe configuration information of each serving cell is used to indicate uplink subframes used by the terminal and muted uplink subframes in each serving cell, and/or used to indicate downlink subframes used by the terminal and muted downlink subframes in each serving cell; and
a transmission module, configured to deliver the subframe configuration information of the at least two serving cells to the terminal and deliver the HARQ timing relationship corresponding to each serving cell of the at least two serving cells to the terminal; wherein
the transmission module is further configured to transmit, according to the HARQ timing relationship corresponding to each serving cell, information with the terminal in the uplink subframes and/or downlink subframes indicated by the subframe configuration information of each serving cell;
wherein the at least two serving cells comprise at least one first serving cell, wherein an HARQ timing relationship corresponding to the first serving cell is an HARQ timing relationship corresponding to TDD configuration n, and an uplink and downlink configuration of TDD configuration n is different from an uplink and downlink configuration of the first serving cell; according to the HARQ timing relationship corresponding to TDD configuration n, an uplink ACK/NACK corresponding to at least one downlink subframe of the first serving cell can be transmitted in a corresponding uplink subframe, and/or, according to the HARQ timing relationship corresponding to TDD configuration n, a downlink ACK/NACK corresponding to a PUSCH of at least one uplink subframe of the first serving cell can be transmitted in a corresponding downlink subframe; and a TDD system has N uplink and downlink configurations, wherein n is a natural number that is less than or equal to 0 and greater than or equal to N-1, and N is a natural number that is greater than or equal to 1;
or,
a timing relationship of a first downlink subframe set of the first serving cell is an HARQ timing relationship of FDD, and a timing relationship of a second downlink subframe set of the first serving cell is an HARQ timing relationship of TDD.

29. The apparatus according to claim 28, wherein:
when the HARQ timing relationship corresponding to TDD configuration n is applied, in the first serving cell, uplink ACKs/NACKs corresponding to PDSCHs of P downlink subframes can be fed back in uplink subframes, and when an original HARQ timing relationship of the first serving cell is applied, in the first serving cell, uplink ACKs/NACKs corresponding to PDSCHs of Q downlink subframes can be fed back in uplink subframes, wherein P is greater than Q and both P and Q are natural numbers; and/or,
when the HARQ timing relationship corresponding to TDD configuration n is applied, in the first serving cell, downlink ACKs/NACKs corresponding to PUSCHs of M uplink subframes can be transmitted in downlink subframes, and when an original HARQ timing relationship of the first serving cell is applied, in the first serving cell, downlink ACKs/NACKs corresponding to PUSCHs of N uplink subframes can be transmitted in downlink subframes, wherein M is greater than N and both M and N are natural numbers;
wherein the original HARQ timing relationship of the first serving cell is an HARQ timing relationship that is applied when no uplink or downlink subframe of the first serving cell is muted.

30. The apparatus according to claim 28 or 29, wherein the HARQ timing relationship comprises: a timing relationship from a PDSCH to an uplink ACK/NACK, and/or, a timing relationship from a PUSCH to a downlink ACK/NACK.

31. The apparatus according to claim 28, 29, or 30, wherein, subframe configuration information of different serving cells of the at least two serving cells indicates that uplink subframes used by the terminal do not overlap at all or partly overlap, and/or, indicates that downlink subframes used by the terminal do not overlap at all or partly overlap.

32. The apparatus according to any one of claims 28 to 31, wherein, radio frame headers of each serving cell of the at least two serving cells are not aligned.

33. The apparatus according to any one of claims 28 to 32, wherein the at least two serving cells comprise one primary serving cell and at least one auxiliary serving cell; subframe configuration information of the primary serving cell indicates that downlink subframes used by the terminal comprise a paging subframe for the network side device to transmit a paging message; and subframe configuration information of the at least one auxiliary serving cell indicates that downlink subframes used by the terminal comprise a synchronization subframe for transmitting a synchronization signal and/or a synchronization tracking signal; and
the transmission module is specifically configured to transmit a paging message to the terminal in the paging subframe of the primary serving cell; and/or, transmit a synchronization signal and/or a synchronization tracking signal to the terminal in the synchronization subframe of the at least one auxiliary serving cell.

34. The apparatus according to any one of claims 28 to 33, wherein, in the at least two serving cells, at least one serving cell comprises one carrier, or, among corresponding uplink and downlink carriers in the at least two serving cells, one uplink carrier corresponds to one or more downlink carriers.

35. The apparatus according to any one of claims 28 to 34, wherein the at least two serving cells comprise two TDD serving cells; and/or, the at least two serving cells comprise one FDD serving cell and one TDD serving cell.

36. The apparatus according to any one of claims 28 to 35, wherein, in the at least two serving cells, at least one serving cell comprises at least one flexible subframe, and an uplink subframe or a downlink subframe, which is of the same time as the flexible subframe, in at least one serving cell is muted.

37. A terminal, comprising: a processor, a memory, a transceiver, and a bus, wherein the processor, the memory, and the transceiver are connected through the bus; and
the memory is configured to store a group of program code, and the processor is configured to invoke the program code stored in the memory to execute the following operations:
obtaining subframe configuration information of at least two serving cells, and obtaining an HARQ timing relationship corresponding to each serving cell of the at least two serving cells, wherein the subframe configuration information of each serving cell of the at least two serving cells is used to indicate uplink subframes used by the terminal and muted uplink subframes in each serving cell, and/or used to indicate downlink subframes used by the terminal and muted downlink subframes in each serving cell; and
transmitting, according to the HARQ timing relationship corresponding to each serving cell of the at least two serving cells, information with a network side device in the uplink subframes and/or downlink subframes indicated by the subframe configuration information of each serving cell;
wherein the at least two serving cells comprise at least one first serving cell, wherein an HARQ timing relationship corresponding to the first serving cell is an HARQ timing relationship corresponding to TDD configuration n, and an uplink and downlink configuration of TDD configuration n is different from an uplink and downlink configuration of the first serving cell; according to the HARQ timing relationship corresponding to TDD configuration n, an uplink ACK/NACK corresponding to at least one downlink subframe of the first serving cell can be transmitted in a corresponding uplink subframe, and/or, according to the HARQ timing relationship corresponding to TDD configuration n, a downlink ACK/NACK corresponding to a PUSCH of at least one uplink subframe of the first serving cell can be transmitted in a corresponding downlink subframe; and a TDD system has N uplink and downlink configurations, wherein n is a natural number that is less than or equal to 0 and greater than or equal to N-1, and N is a natural number that is greater than or equal to 1;
or,
a timing relationship of a first downlink subframe set of the first serving cell is an HARQ timing relationship of FDD, and a timing relationship of a second downlink subframe set of the first serving cell is an HARQ timing relationship of TDD.

38. The terminal according to claim 37, wherein:
when the HARQ timing relationship corresponding to TDD configuration n is applied, in the first serving cell, uplink ACKs/NACKs corresponding to PDSCHs of P downlink subframes can be fed back in uplink subframes, and when an original HARQ timing relationship of the first serving cell is applied, in the first serving cell, uplink ACKs/NACKs corresponding to PDSCHs of Q downlink subframes can be fed back in uplink subframes, wherein P is greater than Q and both P and Q are natural numbers; and/or,
when the HARQ timing relationship corresponding to TDD configuration n is applied, in the first serving cell, downlink ACKs/NACKs corresponding to PUSCHs of M uplink subframes can be transmitted in downlink subframes, and when an original HARQ timing relationship of the first serving cell is applied, in the first serving cell, downlink ACKs/NACKs corresponding to PUSCHs of N uplink subframes can be transmitted in downlink subframes, wherein M is greater than N and both M and N are natural numbers;
wherein the original HARQ timing relationship of the first serving cell is the HARQ timing relationship that is applied when no uplink or downlink subframe of the first serving cell is muted.

39. The terminal according to claim 37 or 38, wherein the HARQ timing relationship comprises: a timing relationship from a PDSCH to an uplink ACK/NACK, and/or, a timing relationship from a PUSCH to a downlink ACK/NACK.

40. The terminal according to claim 37, 38, or 39, wherein, subframe configuration information of different serving cells of the at least two serving cells indicates that uplink subframes used by the terminal do not overlap at all or partly overlap, and/or, indicates that downlink subframes used by the terminal do not overlap at all or partly overlap.

41. The terminal according to any one of claims 37 to 40, wherein, radio frame headers of each serving cell of the at least two serving cells are not aligned.

42. The terminal according to any one of claims 37 to 41, wherein the at least two serving cells comprise one primary serving cell and at least one auxiliary serving cell; subframe configuration information of the primary serving cell indicates that downlink subframes used by the terminal comprise a paging subframe for the network side device to transmit a paging message; and subframe configuration information of the at least one auxiliary serving cell indicates that downlink subframes used by the terminal comprise a synchronization subframe for transmitting a synchronization signal and/or a synchronization tracking signal; and
the processor is further configured to execute the following operations: receiving, in the paging subframe of the primary serving cell, a paging message transmitted by the network side device; and/or, receiving, in the synchronization subframe of the at least one auxiliary serving cell, a synchronization signal and/or a synchronization tracking signal transmitted by the network side device.

43. The terminal according to any one of claims 37 to 42, wherein, in the at least two serving cells, at least one serving cell comprises one carrier, or, among corresponding uplink and downlink carriers in the at least two serving cells, one uplink carrier corresponds to one or more downlink carriers.

44. The terminal according to any one of claims 37 to 43, wherein the at least two serving cells comprise two TDD serving cells; and/or, the at least two serving cells comprise one FDD serving cell and one TDD serving cell.

45. The terminal according to any one of claims 37 to 44, wherein, in the at least two serving cells, at least one serving cell comprises at least one flexible subframe, and an uplink subframe or a downlink subframe, which is of the same time as the flexible subframe, in at least one serving cell is muted.

46. A network side device, comprising: a processor, a memory, a transceiver, and a bus, wherein the processor, the memory, and the transceiver are connected through the bus; and
the memory is configured to store a group of program code, and the processor is configured to invoke the program code stored in the memory to execute the following operations:
determining subframe configuration information of at least two serving cells which is to be delivered to a terminal and determining an HARQ timing relationship corresponding to each serving cell of the at least two serving cells, wherein the subframe configuration information of each serving cell is used to indicate uplink subframes used by the terminal and muted uplink subframes in each serving cell, and/or used to indicate downlink subframes used by the terminal and muted downlink subframes in each serving cell;
delivering the subframe configuration information of the at least two serving cells to the terminal and delivering the HARQ timing relationship corresponding to each serving cell of the at least two serving cells to the terminal; and
transmitting, according to the HARQ timing relationship corresponding to each serving cell, information with the terminal in the uplink subframes and/or downlink subframes indicated by the subframe configuration information of each serving cell;
wherein the at least two serving cells comprise at least one first serving cell, wherein an HARQ timing relationship corresponding to the first serving cell is an HARQ timing relationship corresponding to TDD configuration n, and an uplink and downlink configuration of TDD configuration n is different from an uplink and downlink configuration of the first serving cell; according to the HARQ timing relationship corresponding to TDD configuration n, an uplink ACK/NACK corresponding to at least one downlink subframe of the first serving cell can be transmitted in a corresponding uplink subframe, or, according to the HARQ timing relationship corresponding to TDD configuration n, a downlink ACK/NACK corresponding to a PUSCH of at least one uplink subframe of the first serving cell can be transmitted in a corresponding downlink subframe; and a TDD system has N uplink and downlink configurations, wherein n is a natural number that is less than or equal to 0 and greater than or equal to N-1, and N is a natural number that is greater than or equal to 1;
or,
a timing relationship of a first downlink subframe set of the first serving cell is an HARQ timing relationship of FDD, and a timing relationship of a second downlink subframe set of the first serving cell is an HARQ timing relationship of TDD.

47. The device according to claim 46, wherein:
when the HARQ timing relationship corresponding to TDD configuration n is applied, in the first serving cell, uplink ACKs/NACKs corresponding to PDSCHs of P downlink subframes can be fed back in uplink subframes, and when an original HARQ timing relationship of the first serving cell is applied, in the first serving cell, uplink ACKs/NACKs corresponding to PDSCHs of Q downlink subframes can be fed back in uplink subframes, wherein P is greater than Q and both P and Q are natural numbers; and/or,
when the HARQ timing relationship corresponding to TDD configuration n is applied, in the first serving cell, downlink ACKs/NACKs corresponding to PUSCHs of M uplink subframes can be transmitted in downlink subframes, and when an original HARQ timing relationship of the first serving cell is applied, in the first serving cell, downlink ACKs/NACKs corresponding to PUSCHs of N uplink subframes can be transmitted in downlink subframes, wherein M is greater than N and both M and N are natural numbers;
wherein the original HARQ timing relationship of the first serving cell is an HARQ timing relationship that is applied when no uplink or downlink subframe of the first serving cell is muted.

48. The device according to claim 46 or 47, wherein the HARQ timing relationship comprises: a timing relationship from a PDSCH to an uplink ACK/NACK, and/or, a timing relationship from a PUSCH to a downlink ACK/NACK.

49. The device according to claim 46, 47, or 48, wherein, subframe configuration information of different serving cells of the at least two serving cells indicates that uplink subframes used by the terminal do not overlap at all or partly overlap, and/or, indicates that downlink subframes used by the terminal do not overlap at all or partly overlap.

50. The device according to any one of claims 46 to 49, wherein, radio frame headers of each serving cell of the at least two serving cells are not aligned.

51. The device according to any one of claims 46 to 50, wherein the at least two serving cells comprise one primary serving cell and at least one auxiliary serving cell; subframe configuration information of the primary serving cell indicates that downlink subframes used by the terminal comprise a paging subframe for the network side device to transmit a paging message; and subframe configuration information of the at least one auxiliary serving cell indicates that downlink subframes used by the terminal comprise a synchronization subframe for transmitting a synchronization signal and/or a synchronization tracking signal; and
the processor is further configured to execute the following operations: transmitting a paging message to the terminal in the paging subframe of the primary serving cell; and/or, transmitting a synchronization signal and/or a synchronization tracking signal to the terminal in the synchronization subframe of the at least one auxiliary serving cell.

52. The device according to any one of claims 46 to 51, wherein, in the at least two serving cells, at least one serving cell comprises one carrier, or, among corresponding uplink and downlink carriers in the at least two serving cells, one uplink carrier corresponds to one or more downlink carriers.

53. The device according to any one of claims 46 to 52, wherein the at least two serving cells comprise two TDD serving cells; and/or, the at least two serving cells comprise one FDD serving cell and one TDD serving cell.

54. The device according to any one of claims 46 to 53, wherein, in the at least two serving cells, at least one serving cell comprises at least one flexible subframe, and an uplink subframe or a downlink subframe, which is of the same time as the flexible subframe, in at least one serving cell is muted.
